# EUROPÄISCHE PATENTSCHRIFT

(11) **EP 0 577 854 B1**
(45) Veröffentlichungstag und Bekanntmachung des Hinweises auf die Patenterteilung: **14.02.1996**
(21) Anmeldenummer: 92107999.2
(22) Anmeldetag: 12.05.1992
(51) Int. Cl.: B01D 33/073, B01D 33/39, B01D 33/68

(54) **Filtervorrichtung**
Filter device
Dispositif de filtration

(43) Veröffentlichungstag der Anmeldung: 12.01.1994
(73) Patentinhaber: BAUKO BAUKOOPERATION GMBH, A-5020 Salzburg (AT)
(72) Erfinder: Kupka Martin, D-76137 Karlsruhe (DE)
(74) Vertreter: Körner, Ekkehard, Dipl.-Ing.

(56) Entgegenhaltungen:
- EP-A- 0 370 118
- EP-A- 0 377 054
- GB-A- 1 557 899
- US-A- 2 678 133
- US-A- 4 332 541

## Beschreibung

Bei der Filtration von mit Feststoffen beladenen Flüssigkeiten stellt sich das Problem, daß sich auf den Filtermedien sehr schnell Feststoffe abscheiden, die sich zu einem Filterkuchen aufbauen und das Filtermedium verstopfen und somit den Flüssigkeitsdurchsatz durch das Filtermedium rasch vermindern. Aus diesem Grunde ist man zur Querstromfiltertechnik übergegangen, bei der eine parallel zur Oberfläche des Filtermediums verlaufende Strömungskomponente in der zu filternden Trübe erzeugt wird, die ein vorzeitiges Abscheiden von Feststoffanteilen auf dem Filtermedium verhindert.

Diese sogenannte Querströmung wird bei der aus der EP-B-0 178 389 bekannten Filterpresse mit Hilfe eines zwischen zwei benachbarten Filterelementen umlaufenden Rotors hervorgerufen. Eine andere Technik, die rohrförmige Filterkörper verwendet, die jeweils aus einem perforierten Rohr bestehen, das von einer Membran umkleidet oder mit einer solchen ausgekleidet ist, erzeugt die Querströmung durch Entlangleiten der zu filternden Trübe längs des Rohres bzw. Durchleiten der Trübe durch das Rohr, sodaß das Filtrat die Membran und die Perforationen im Rohr durchdringt. Da aufgrund dieser Filtratableitung die Strömungsgeschwindigkeit längs des Rohres zum Rohrende hin abnimmt, entwickelt sich der sich trotz dieser Querströmung unvermeidlich auf der Filtermembran aufbauende Filterkuchen ungleichmäßig längs des Rohres, was zu einer unwirtschaftlichen Arbeitsweise führt. Trotz Strömungsgeschwindigkeiten von bis zum 5 m/s im Rohr lassen sich diese negativen Effekte nicht verhindern.

Aus der EP-A-0 370 118 ist eine Filtervorrichtung bekannt, die mehrere konzentrisch ineinander sitzende zylindermantelförmige Filterkörper verwendet, wobei benachbarte Filterkörper in zueinander entgegengesetzten Drehrichtungen umlaufen, sodaß an allen Filterkörpern Querströmungen erzeugt werden. Diese Konstruktion ist relativ aufwendig, und es ist insbesondere auch der Wechsel der Filtermedien an den Filterkörpern nicht einfach zu bewerkstelligen. Die Filterkörper verlangen speziell dimensionierte Filtermedien (Filtertücher oder -membranen) entsprechend ihrer unterschiedlichen Größen, wobei in jeder Filtervorrichtung die betreffende Größe nur einmal vorkommt. Dies macht die Lagerhaltung relativ teuer.

Aus der EP-A-0 539 874, die für die Vertragsstaaten CH, DE, ES, FR, GB und LI zum Stand der Technik gemäß Artikel 54 (3) und (4) EPÜ zählt, ist ein Filterapparat zum Trennen der Feststoffpartikel aus einer Flüssigkeit bekannt, bestehend aus einem Druckbehälter, in dem mit einem Filterüberzug versehene Filterröhren zur Aufnahme und Ableitung des Filtrats ineinander geschachtelt angeordnet sind, von denen wenigstens ein Teil um die lotrechte Achse des Druckbehälters drehbar gelagert und motorisch antreibbar sind. Die Filterröhren sind vertikal und in Umfangsrichtung in gegenseitigem Abstand voneinander auf verschiedenen Radien angeordnet und mit ihrem einen, die Ableitung für das Filtrat enthaltenden Ende an ringförmigen hohlen Tragkonstruktionen unterschiedlichen Durchmessers befestigt, die jeweils über hohle Streben mit einer Hohlwelle zur Ableitung des Filtrats verbunden sind. Auf unterschiedlichen Radien angeordnete Filterröhren können mit unterschiedlichem Drehsinn im Druckbehälter umlaufen.

Der Erfindung liegt die Aufgabe zugrunde, eine Filtervorrichtung anzugeben, bei der eine vorzeitige Abscheidung von Feststoffanteilen aus der zu filternden Flüssigkeit auf den Filterkörpern vermieden ist, und die einfach aufgebaute Filterkörper verwendet, die außerdem einen Wechsel der Filtermedien in einfacher Weise möglich machen.

Diese Aufgabe wird durch die im Anspruch 1 bzw. im Anspruch 23 angegebene Erfindung gelöst. Ausgestaltungen der Erfindung sind Gegenstand der abhängigen Ansprüche.

Die Erfindung verwendet die an sich bereits bekannten rohrförmigen Filterkörper, die Keramikrohre sein können oder aus perforierten Rohren, die an ihrem Außenumfang mit einem schlauchförmigen Filtermedium bedeckt sind, bestehen. Solche Filterkörper sind relativ einfach herstellbar, und die Filtermedien sind an ihnen leicht austauschbar. Die Filterkörper sind handelsübliche Elemente, was sich günstig auf den Preis der gesamten Filtervorrichtung auswirkt.

Im Gegensatz zum Stand der Technik werden diese Filterkörper von der zu filternden Flüssigkeit aber nicht in Längsrichtung der Rohre angeströmt, sondern in Querrichtung aufgrund der Umlaufbewegung der Filterkörper quer zu ihrer Längserstreckung um eine zu ihrer Längserstreckung parallele Umlaufachse. Da die Filterkörper einer Gruppe auf einem gemeinsamen Kreis angeordnet sind und quasi einen "Käfig" mit kreisförmigem Grundriß bilden, ergeben sich in dem Behälter, in dem die Filterkörper umlaufen, auch radiale Strömungskomponenten, die durch die Zwischenräume zwischen zwei benachbarten Filterkörpern hindurchlaufen. Die Filterkörper werden somit allseitig von der zu filternden Flüssigkeit umströmt. Besonders vorteilhaft werden diese radialen, nach außen gerichteten Strömungen (Zentrifugalströmungen), die für die Erfindung so typisch sind, unterstützt, wenn die Filterkörper in mehreren Gruppen angeordnet sind, wobei jede Gruppe auf einem von mehreren konzentrischen Kreisen unterschiedlicher Durchmesser angeordnet ist, d.h. es sind mehrere "Käfige" ineinander angeordnet.

In weiterer Weiterbildung ist vorgesehen, daß von zwei benachbarten Gruppen von Filterkörpern die eine Gruppe umläuft und die konzentrisch dazu angeordnete Gruppe entweder feststeht oder gegensinnig umläuft. Es ergeben sich dadurch in den Bereichen um die Filterkörper zyklische Druckänderungen, die entsprechend zyklische Strömungsgeschwindigkeitsänderungen zur Folge haben, was die Abscheidung von Feststoffanteilen aus der zu filterenden Flüssigkeit auf den Filterkörpern behindert. Es ist bemerkenswert, daß sich längs der Filterkörper annähernd gleichmäßige Strömungsverhältnisse ergeben, sodaß der sich zwangläufig einstellende Feststoffniederschlag auf den Filterkörpern keine ungleichförmige Verteilung längs der Filterkörper aufweist.

Die Erfindung wird nachfolgend unter Bezugnahme auf in den Zeichnungen dargestellte Ausführungsbeispiele näher erläutert. Es zeigt:
- Fig. 1: eine Axialschnittdarstellung einer ersten Ausführungsform einer Filtervorrichtung nach der Erfindung mit drei Gruppen von Filterkörpern;
- Fig. 2: eine schematische Radialschnittdarstellung der Filtervorrichtung nach Fig. 1;
- Fig. 3: eine Axialschnittdarstellung einer zweiten Ausführungsform einer Filtervorrichtung;
- Fig. 4: eine schematische Radialschnittdarstellung der Filtervorrichtung nach Fig. 3, und
- Fig. 4a: in vergrößerter Darstellung die Einzelheit A von Fig. 4;
- Fig. 5: eine dritte Ausführungsform der Erfindung im Axialschnitt;
- Fig. 6: eine Abwandlung der dritten Ausführungsform;
- Fig. 7: eine weitere Abwandlung der dritten Ausführungsform;
- Fig. 8: eine vergrößerte Teildarstellung der Ausführungsform von Fig. 7;
- Fig. 9: eine schematische Radialschnittdarstellung von Fig. 8 zur Erläuterung der Strömungsverhältnisse;
- Fig. 10: eine Teildarstellung einer vierten Ausführungsform der Erfindung;
- Fig. 11: einen schematischen Radialschnitt durch die Ausführungsform nach Fig. 10 zur Erläuterung der Strömungen, und
- Fig. 12: im Axialschnitt eine fünfte Ausführungsform der Erfindung;

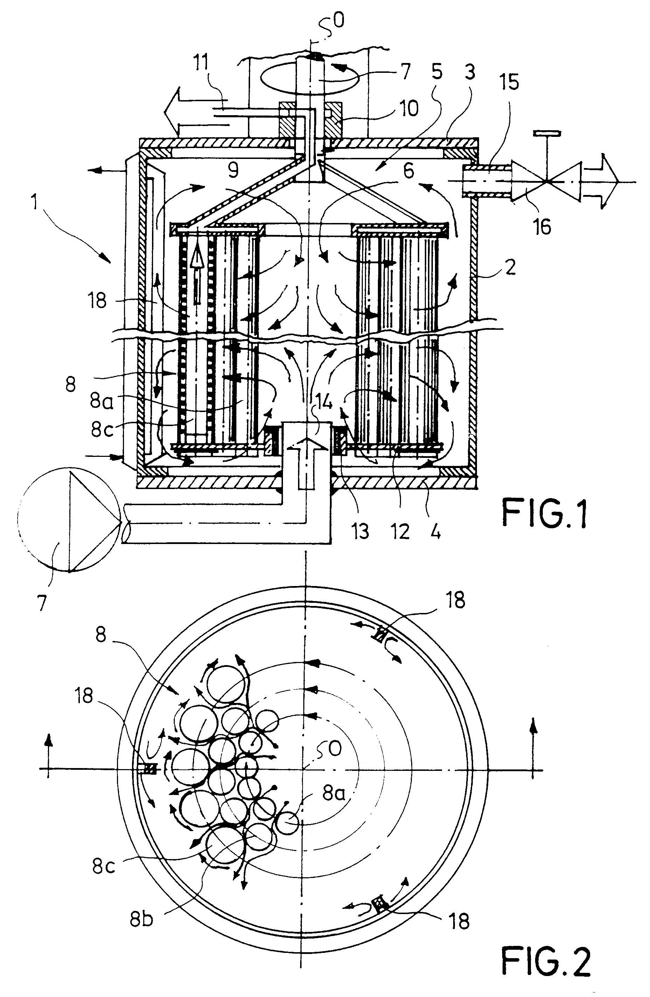

Man erkennt in Fig 1 ein zylindrischer Behälter 1 mit einem zylindrischen Behältermantel 2, der an beiden Enden von Stirnwänden 3 und 4 verschlossen ist. In dem Behälter 1 befindet sich ein insgesamt mit 5 bezeichneter Rotor. Dieser Rotor 5 besteht aus einer Tragvorrichtung 6, die sich in im wesentlichen radialer Richtung von einer Hohlwelle 7 erstreckt, die in der oberen Behälterstirnwand 3 abgedichtet und drehbar gelagert ist. Weiterhin gehört zu dem Rotor 5 eine Vielzahl von allgemein mit 8 bezeichneten Filterkörpern, die in mehreren, im dargestellten Beispiel drei, Gruppen an der Tragvorrichtung 6 befestigt sind und sich parallel zur Achse O des Behälters 1 erstrecken. Jede Gruppe von Filterkörpern ist auf einem zur Achse O des Behälters 1 konzentrischen Kreis angeordnet, wobei die Durchmesser der auf dem mittleren Kreis angeordneten Filterkörper 8b größer sind als die Durchmesser der auf dem innersten Kreis angeordneten Filterkörper 8a und kleiner als die Durchmesser der auf dem äußersten Kreis angeordneten Filterkörper 8c. Auf diese Weise ist es möglich, auf jedem der Kreise eine gleich große Anzahl von Filterkörpern anzuordnen und etwa gleichförmige Strömungswege vom Zentrum des Behälters 1 zwischen den Filterkörpern 8 hindurch in Richtung auf den Mantel 2 des Behälters 1 zu erzielen. Die zuvor verwendeten Suffixe "a" bis "c" dienen hier nur zur Unterscheidung der Filterkörper 8, die verschiedenen Gruppen angehören.

Diese Anordnung von schlanken, im wesentlichen rohrförmigen Filterkörpern kann mit durchlaufenden, zu filternden Flüssigkeiten mit Drücken von 0,1 bis 80 bar beaufschlagt werden. Aufgrund der im Betrieb beim Umlauf der Filterkörper erzielbaren hohen Überströmgeschwindigkeiten sind Vorfilter nicht erforderlich, auch wenn mit sehr feinporigen Filtermembranen gearbeitet wird. Hierdurch wird es erstmals möglich, Umkehr-Osmose-Verfahren zu realisieren, die im Zulauf der zu filternden Flüssigkeit Feststoffbelastungen in beachtlicher Größenordnung enthalten können. Einsatzgebiet ist ferner die Mikro-Filtration.

Die Filterkörper 8 sind mit ihren einen Enden an der Tragvorrichtung 6 befestigt. Die Tragvorrichtung 6 weist im Innern Kanäle 9 auf, die in den Innenraum der Hohlwelle 7 münden. Die Hohlwelle 7 ist von einem Dichtungsgehäuse 10 mit einer Gleitringdichtung umgeben, von dem ein Auslaß 11 abgeht. Die Hohlwelle 7 hat wenigstens eine Querbohrung, die den Innenraum der Hohlwelle 7 mit dem Innenraum des Dichtungsgehäuses 10 verbindet. Die anderen Enden der Filterkörper 8 sind an einer gemeinsamen Tragplatte 12 befestigt, die zwischen den Filterkörpern 8 perforiert ist, um eine Strömung durch die Tragplatte 12 hindurch zu ermöglichen. In ihrer Mitte weist die Tragplatte 12 eine Nabe 13 auf, die auf einem Rohrstutzen 14 gelagert ist, der die untere Behälterstirnwand 4 durchdringt. Dieser Rohrstutzen 14 ist dazu vorgesehen, die zu filternde Flüssigkeit unter Druck in den Behälter 1 einzuleiten.

Am oberen Ende ist im Mantel 2 des Behälters 1 ein Auslaß 15 ausgebildet, der mittels eines Drosselventils 16 verschließbar ist. Dieser Auslaß 15 führt über eine (nicht dargestellte) Rückführleitung zu einem Puffer, von dem aus der Rohrstutzen 14 über eine Pumpe 17 mit der zu filternden Flüssigkeit versorgt wird.

Es ist anzumerken, daß zur Erleichterung der Zugänglichkeit des Behälterinnenraums wenigstens eine der Stirnwände, vorzugsweise die obere Stirnwand 3, vom Mantel 2 lösbar ist.

Die Hohlwelle 7 ist von einem hier nicht dargestellten Drehantrieb in Rotation versetzbar. Im Betrieb wird mittels der Pumpe 17 die zu filternde Flüssigkeit in den Behälter 1 eingeleitet. Gleichzeitig dreht der Rotor 5, sodaß sich an den Filterkörpern 8 Querströmungen einstellen und im Behälter 1 aufgrund der von dem Rotor 5 hervorgebrachten Wirkung eine zentral von innen nach außen gerichtete Strömungskomponente einstellt.

Um zu verhindern, daß die zu filternde Flüssigkeit von dem Rotor 5 zu stark in Rotation versetzt wird, sind innen am Mantel 2 mehrere Strömungsstörer 18 befestigt, die nach Art von Leisten ausgebildet sind und sich in axialer Richtung parallel zu den Filterkörpern 8 erstrecken.

Durch die erwähnte radiale Strömungskomponente ergeben sich, wie Fig. 2 zeigt, Flüssigkeitsströmungen, die durch die Zwischenräume zwischen den Filterkörpern 8a, 8b und 8c hindurch radial von innen nach außen verlaufen. Hieraus folgt eine Umströmung der Filerkörper 8 quer zu ihrer Längserstreckung. Die durch die Filtermedien und die Perforation in die rohrförmigen Filterkörper eintretende gefilterte Flüssigkeit (Filtrat) wird durch die Tragvorrichtung 6 (Kanal 9) und den Innenraum der Hohlwelle 7 hindurch und das Dichtungsgehäuse 10 zum Auslaß 11 abgegeben. Um eine zu starke Eindickung der zu filternden Flüssigkeit zu vermeiden, kann das Ventil 16 gedrosselt geöffnet werden, sodaß sich eine kontinuierliche Strömung der zu filternden Flüssigkeit durch den Behälter 1 hindurch einstellt, aus der fortlaufend Filtrat abgeleitet wird. Es versteht sich, daß in dem erwähnten Pufferbehälter dadurch eine allmähliche Aufkonzentration der zu filternden Flüssigkeit stattfindet. Die konzentrierte zu filterende Flüssigkeit (Trübe oder Schlamm) kann bei Erreichen eines vorgegebenen Eindickungsgrades in anderer Weise weiterverarbeitet werden.

Die erfindungsgemäße Überströmung der Filterflächen an den Filterkörpern ist derart intensiv, daß Schlämme mit sehr hohen Feststoffbelastungen verarbeitet werden können, ohne daß hieraus eine Reduzierung der Durchflußrate des Filtrats durch auf den Filtermedien sedimentierende Feststoffrückstände zustande kommen kann. Es sind ohne Schwierigkeit Strömungsgeschwindigkeiten von 10 m/s und mehr erzielbar, die für die Verhinderung einer Sedimentation an den Filtermedien günstig sind.

Im Falle spezifischer Filtermedien auf den Filterkörpern, die allmählich verstopft werden könnten, wenn die zu filternde Flüssigkeit kolloidale Bestandteile enthält, kann durch eine Rückspülung und Regeneration der Kapillaren des Filtermediums die Leistungsfähigkeit der Filtervorrichtung aufrechterhalten werden. Dabei erfolgt im Betrieb oder im Stillstand des Rotors 5 ein Rückspülprozeß mit Filtrat. Zu diesem Zweck wird Filtrat in die Filterkörper rückgeführt und erzeugt dort ein umgekehrtes Druckgefälle über den Filtermedien, wozu der Filtrationsdruck im Behälter nicht unbedingt abgebaut werden muß, es ist lediglich erforderlich, daß der Druck des rückgeführten Filtrats höher ist, als der Druck, mit der die zu filternde Flüssigkeit zugeführt wird. Diese Druckdifferenz braucht beispielsweise nur 0,5 bar zu betragen. Bei dieser Rückspülung werden die schlauchförmigen Filtermedien entsprechend ihrem Dehnvermögen belastet, wobei die Dehnung dazu vorteilhaft beiträgt, die Poren zu erweitern, um das Rückspülen zu begünstigen.

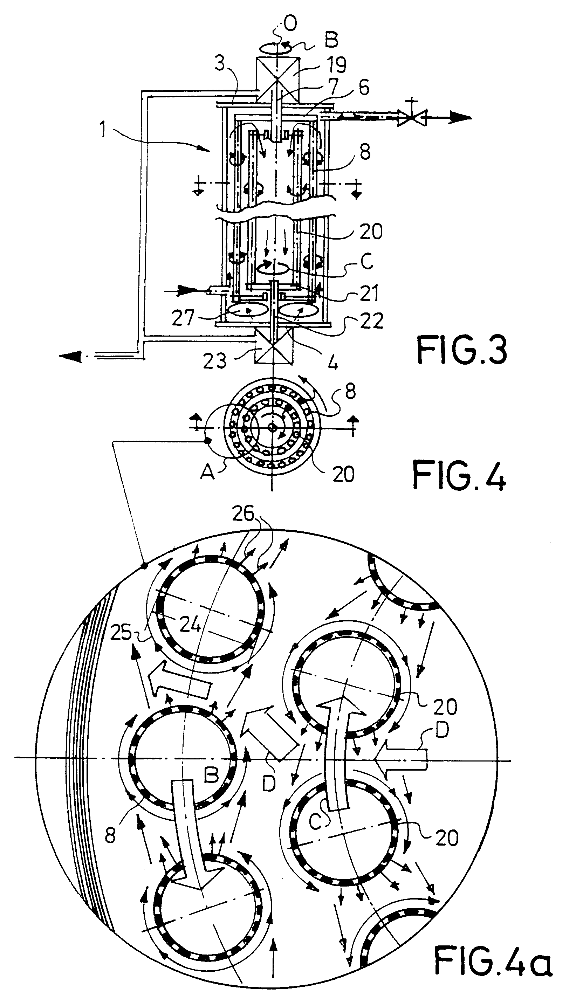

Fig. 3 zeigt eine zweite Ausführungsform der Erfindung. Diese umfaßt in einem gemeinsamen Behälter 1 zwei Gruppen von Filterkörpern, die zu einander gegensinnig um die Behälterachse O umlaufen. Die erste Gruppe Filterkörper 8 ist an einer ersten Tragvorrichtung 6 befestigt, die ihrerseits an einer ersten Hohlwelle 7 befestigt ist, die von einem ersten Drehantrieb, beispielsweise einem Elektromotor 19 in Drehung versetzt ist. Die Hohlwelle 7 durchdringt eine erste Behälterstirnwand 3.

Die zweite Gruppe Filterkörper 20 ist an einer zweiten Tragvorrichtung 21 befestigt, die ihrerseits an einer zweiten Hohlwelle 22 befestigt ist, die die zweite Behälterstirnwand 4 durchdringt und von einem zweiten Elektromotor 23 angetrieben ist. Dabei können, wie dargestellt, die den Tragvorrichtungen 6 bzw. 21 entfernten Enden der Filterkörper bzw. 20 an Tragplatten befestigt sein, die mittels Naben an Verlängerungen der Hohlwellen 7 bzw. 22 gelagert sind. Die Strömungswege von den Innenräumen der Filterkörper 20 zu der zweiten Hohlwelle 22 sind vergleichbar dem vorbeschriebenen Beispiel.

Fig. 4 zeigt schematisch die Anordnung der Filterkörper 8 und 20 mit ihrem zueinander entgegengesetzten Umlauf um die Behälterachse O in einer Radialschnittdarstellung. Die sich durch den gegensinnig Umlauf einstellenden Strömungsbedingungen sind als Ausschnitt A in Fig. 4a in vergrößertem Maßstab dargestellt und sollen nachfolgend erläutert werden.

Man erkennt in Fig. 4a eine äußere Gruppe von Filterkörpern 8, die auf einem Kreisring angeordnet sind und entgegen dem Uhrzeigersinn umlaufen, wie durch den Pfeil B angedeutet. Konzentrisch zu dieser Gruppe von Filterkörpern 8 ist eine zweite Gruppe Filterkörper 20 auf einem zum ersten Kreisring konzentrischen Kreisring kleineren Durchmessers angeordnet. Diese zweite Gruppe Filterkörper 20 läuft im Uhrzeigersinn um die Behälterachse um, wie durch den Pfeil C dargestellt ist. Die Filterkörper 8 und 20 laufen somit aneinander vorbei. Der Abstand der beiden Filterkörpergruppen ist dabei, wie gezeigt, etwa so groß wie der Abstand der Filterkörper innerhalb einer Gruppe. Die Filterkörper 8 und 20 haben im dargestellten Beispiel gleiche Durchmesser, doch können diese voneinander auch abweichen. Gleiche Durchmesser machen die Lagerhaltung an Filtermedien wirtschaftlicher.

Im Betrieb erzeugt der Umlauf der Filterkörper 8 entgegen dem Uhrzeigersinn an jedem Filterkörper 8 entsprechend der Flächenprojektion 24 des Filterkörpers in die zu filternde Flüssigkeit eine intensive Überströmung des Filterkörpers 8, die mit den Pfeilen 25 gekennzeichnet ist, in Abhängigkeit zur Umlaufgeschwindigkeit der Filterkörper 8 und des Energieeintrags. Diese Überströmung 25 betrifft im wesentlichen den im Umlaufrichtung liegenden Halbmesser des Filterkörpers 8 und die sich daran anschließenden Oberflächenbereiche. Diese Überströmung ist über die gesamte Länge des Filterkörpers 8 gleichmäßig, was gegenüber herkömmlichen Filtervorrichtungen mit axial durchströmten Rohrfilterkörpern einen beachtlichen Leistungszuwachs bringt.

Im bezüglich der Umlaufrichtung hinteren Flächenbereich des Filterkörpers 8, also im Strömungsschatten, entsteht ein Unterdruck, der mit zunehmender Umlaufgeschwindigkeit größer wird. Dieser Unterdruck wirkt in Richtung der Pfeile 26 und hat zur Folge, daß eine Sedimentation von Feststoffen im Strömungsschatten am Filterkörper 8 verhindert wird. Während also auf der "Vorderseite" des quer zu seiner Längsrichtung bewegten Filterkörpers 8 intensive Überströmungen 25 auftreten, die eine Sedimentation durch den Querstromeffekt verhindern, wird die Sedimentation im Stömungsschatten aufgrund des Unterdrucks vermieden.

Gleiches gilt entsprechend für die zweite Gruppe von Filterkörpern 20, nur daß dort die Umlaufrichtung umgekehrt ist. Auf eine Erläuterung der zuvor beschriebenen Effekte kann daher verzichtet werden.

Die Drehzahlen der gegenläufigen Filterkörper summieren sich in Bezug auf die von dem Umlauf hervorgerufenen Strömungskomponenten, insbesondere die zentrifugalen Strömungskomponenten und bei dem nachfolgend geschilderten Phänomen.

Fig. 4a zeigt ein Phänomen, das sich in Folge des gegensinnigen Umlaufs der Filterkörper 8 und 20 in der zu filternden Flüssigkeit einstellt. Die Filterkörper 8 und 20 begegnen sich während des Umlaufs und entfernen sich voneinander. Der zwischen zwei gegensinnig umlaufenden Filterkörper 8 und 20 bestehende Spalt nimmt in seiner Weite daher zunächst ab und anschließen wieder zu. Hierdurch entstehen im Bereich zwischen den Filterkörpern 8 und 20 in der zu filternden Flüssigkeit pulsierende Druckänderungen, die pulsierende Strömungen zur Folge haben, die quer zu der Umlaufachse verlaufen und einer Sedimentation von Feststoffen auf den Filterkörpern 8 und 20 entgegenwirken. Je höher die Drehzahlen sind, umso intensiver werden diese querverlaufenden Strömungen. Außerdem stellt sich durch den Umlauf der Filterkörper um die Behälterachse O eine radial nach außen gerichtete Strömungskomponente D in der zu filternden Flüssigkeit aufgrund von Zentrifugalwirkungen ein.

Wie Fig. 3 ferner zeigt, ist mit der zweiten Hohlwelle 22 ein Rührwerk 27 verbunden, das in der zu filternden Flüssigkeit eine homogenisierende Vertikalströmung hervorruft, die als zusätzliche Strömungskomponente die Freihaltung der Filterflächen von Sedimenten zusätzlich begünstigt.

Die erwähnte Lagerung der die Enden der Filterkörper 8 und 20 haltenden Tragplatten an den Hohlwellen vermindert eine mögliche Auslenkung der Filterkörper unter dynamischer Belastung, was die Möglichkeit eröffnet, lange, schlanke Filterkörper mit großer Filterfläche zu verwenden.

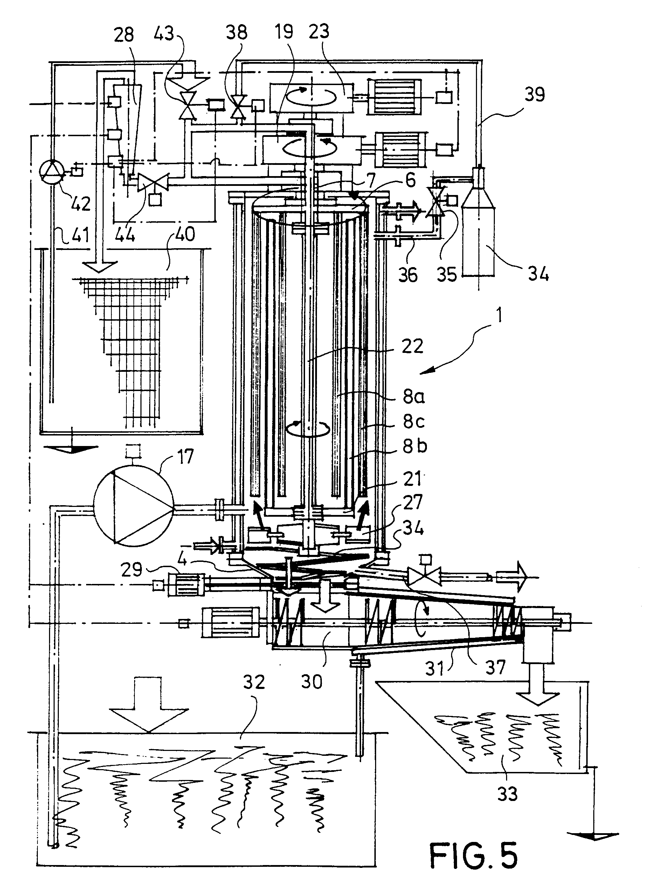

Fig. 5 zeigt in einer schematisch dargestellten Filteranlage eine dritte Ausführungsform der Erfindung. Diese enthält in einem Behälter 1 eine erste Tragvorrichtung, von der ein hohler Träger 6 dargestellt ist, an einer ersten Hohlwelle 7, und an dem ersten Träger 6 sind zwei Gruppen von Filterkörpern 8a und 8c auf zwei zueinander konzentrischen Kreisen angebracht. Die erste Hohlwelle 7 ist von einem ersten Drehantrieb 19 angetrieben. Durch die erste Hohlwelle 7 hindurch erstreckt sich eine zweite Hohlwelle 22, die von einem über den ersten Antrieb 19 angeordneten zweiten Antrieb 23 angetrieben ist. Die zweite Hohlwelle 22 erstreckt sich bis kurz vor das entgegengesetzte Ende des Behälters 1 und trägt eine Tragvorrichtung 21, an der auf einem Kreisring konzentrisch zu den Filterkörpern 8a und 8c eine dritte Gruppe von Filterkörpern 8b angeordnet ist, die sich zwischen den Filterkörpern 8a und 8c der beiden anderen Gruppen befinden. Die beiden Drehantriebe 19 und 23 versetzen die Hohlwellen 7 bzw. 22 in zueinander entgegengesetzte Drehungen. Auf diese Weise stellen sich zwischen den gegenläufig umlaufenden Filterkörpern jeweils die in Fig. 4a dargestellten Strömungsverhältnisse in der den Behälter 1 ausfüllenden, zu filternden Flüssigkeit ein. Am unteren Ende trägt die zweite Hohlwelle 22 ein Rührwerk 27, das vergleichbar der Fig. 3 eine axiale Strömungskomponente in der zu filternden Flüssigkeit hervorruft.

Die Hohlwellen sind wie bei der Ausführungsform nach Fig. 3 an Ablaufeinrichtungen angeschlossen, die das Filtrat aus den Filterkörpern 8a bis 8c abführen. Die zu filternde Flüssigkeit wird dem Behälter 1 mittels einer Pumpe 17 unter Druck zugeführt.

Mit dieser Filteranlage läßt sich folgendes Verfahren ausführen:
Die zu filternde Flüssigkeit wird in den Behälter 1 eingeleitet. Das Filtrat wird von den Filterkörpern 8a bis 8c aus der zu filternden Flüssigkeit entnommen. Ist ein bestimmter Schlammkonzentratgehalt erreicht, der aus der Filtratmenge mittels eines Durchflußmessers 28 im Auslauf der Hohlwellen ermittelbar ist, so öffnet ein Schieberventil 29, das an der unteren Stirnwand 4 des Behälters 1 vorgesehen ist, einen definierten Spalt. Hierdurch gelangt eine definierte Konzentratmenge in eine sich an die untere Stirnwand 4 anschließende Schneckenpresse 30 und wird dort ausgepreßt. Das ausgepreßte, relativ schmutzige Filtrat fließt durch eine Auslaßleitung 31 zurück in einen Tank 32, aus dem die Filtervorrichtung mit zu filternder Flüssigkeit gespeist wird. Die verpreßten Feststoffe werden von der Schneckenpresse 30 kontinuierlich in einen Entsorgungsbehälter 33 entsorgt. Ein Wendelrührer 34, der am unteren Ende der zweiten Hohlwelle 22 angebracht ist, unterstützt die Abförderung des von der Filtervorrichtung eingedickten Konzentrats durch die genannte Spaltöffnung in die Schneckenpresse 30.

Gemäß einem zweiten Verarbeitungsschritt bleiben bei Erreichen der vorgegebenen Schlammkonzentration in der Filtervorrichtung die Antriebe 19 und 23 stehen. Sodann wird der Druck im Behälter mit Hilfe der Pumpe 17 kontinuierlich erhöht. Die Feststoffe scheiden sich dann sehr schnell auf den Filterkörpern 8a bis 8c ab, da die Querströmung aufgehört hat. Werden aufgrund dieser Abscheidung die Filtermedien der Filterkörper so undurchdringlich, daß am Filtratdurchflußmesser 28 kein Durchfluß mehr meßbar ist, wird eine pneumatische Druckquelle (Gasflasche) 34 mittels eines Ventils 35 geöffnet. Von dem Ventil 35 führt eine Druckleitung 36 in den Behälter 1. Gleichzeitig wird ein an der unteren Stirnwand 4 ausgebildeter Rückstandsauslauf 37 geöffnet, und die fluiden Rückstände über den Sedimenten auf den Filterkörpern werden von der Gasströmung, die von der pneumatischen Druckquelle 34 stammt, von den Sedimenten auf den Filterkörpern weggeblasen. Wasserdurchlässige Sedimente filtern ihren Feuchtigkeitsgehalt durch die Filtermediumporen aus und trocknen. Luftdurchlässige Sedimente werden trocken geblasen. Durch den Gasdruck verfestigen sich die Sedimente auf den Filtermedien zu festen Kuchen. Um diese Kuchen von den Filterkörpern zu lösen, wird anschließend für Sekundenbruchteile ein Ventil 38 geöffnet, das in einer Druckleitung 39 angeordnet ist, die die Druckgasquelle 34 mit den Hohlwellen 7 und 22 verbindet. Den Filtermedien wird somit von rückwärts ein Druckstoß vermittelt, der die Filtermittel aufbläht und die Filterkuchen zum Abplatzen bringt, die in Richtung auf die untere Behälterstirnwand 4 abfallen. Der Wendelrührer 34 befördert diese trockenen Sedimente zu der schon erwähnten Schneckenpresse 30.

Es ist ferner möglich, die Filtermittel rückzuspülen. Zu diesem Zweck ist eine in einem Filtratsammelbehälter 40 sich zu den Hohlwellen 7 und 22 erstreckende Leitung 41 vorgesehen, in der eine Pumpe 42 und ein Ventil 43 angeordnet sind. Die zu dem Strömungsmesser 28 führende Leitung wird dann mittels eines Ventils 44 verschlossen und das aus dem Filtratsammelbehälter 40 mittels der Pumpe 42 abgesaugte Filtrat wird den Filtermedien auf den Filterkörpern 8a bis 8c von rückwärts zugeführt.

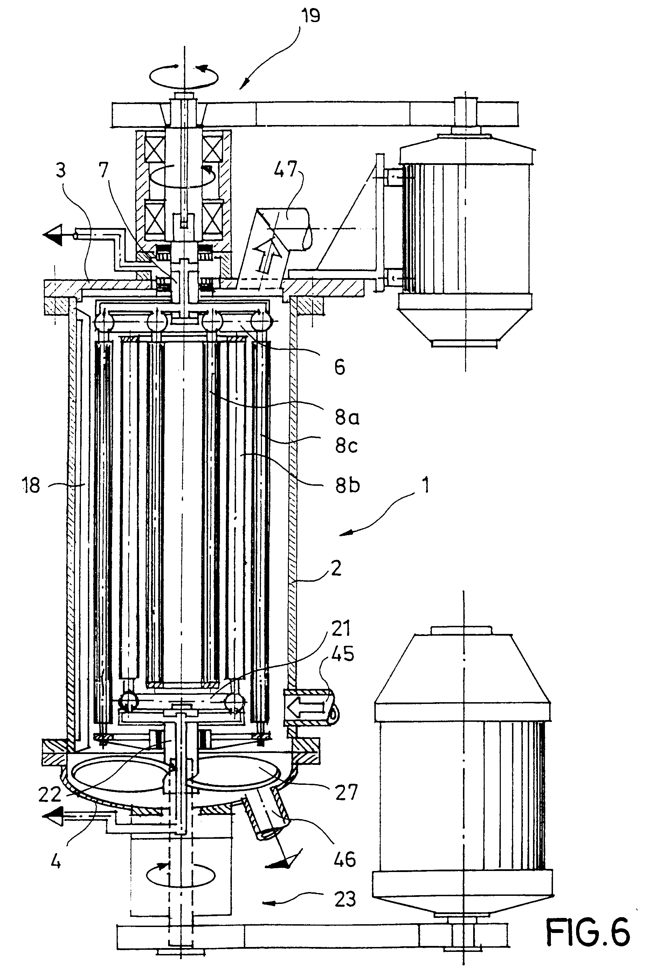

Fig. 6 zeigt eine der Fig. 5 vergleichbare Filtervorrichtung mit gegensinnig umlaufenden Filterkörpern 8a und 8c bzw. 8b. Bei dieser Ausführungsform erstrecken sich die Hohlwellen 7 und 22 durch entgegengesetzte Stirnwände 3 und 4 des Behälters 1. Die Antriebe 19 und 23 sind dementsprechend an entgegengesetzten Enden des Behälters 1 angeordnet. Die zu filternde Flüssigkeit wird durch einen Einlaß 45 im unteren Bereich des Behältermantels 2 zugeführt. An der unteren Behälterstirnwand 4 ist ein Auslaß 46 für eingedicktes Konzentrat vorgesehen. Zum Betrieb der Vorrichtung im Durchlauf der zu filternden Flüssigkeit ist in der oberen Behälterstirnwand 3 ein Konzentratauslaß 47 vorgesehen. Im dargestellten Beispiel ist die untere Behälterstirnwand leicht kuppelförmig gestaltet, um sie strömungsgünstig in Bezug auf ein auf der zweiten Hohlwelle angeordnetes Rührwerk 27 zu gestalten. Die Antriebe 19 und 23 find für den gegenläufig Antrieb der Filterkörper 8a und 8c bzw. 8b ausgelegt.

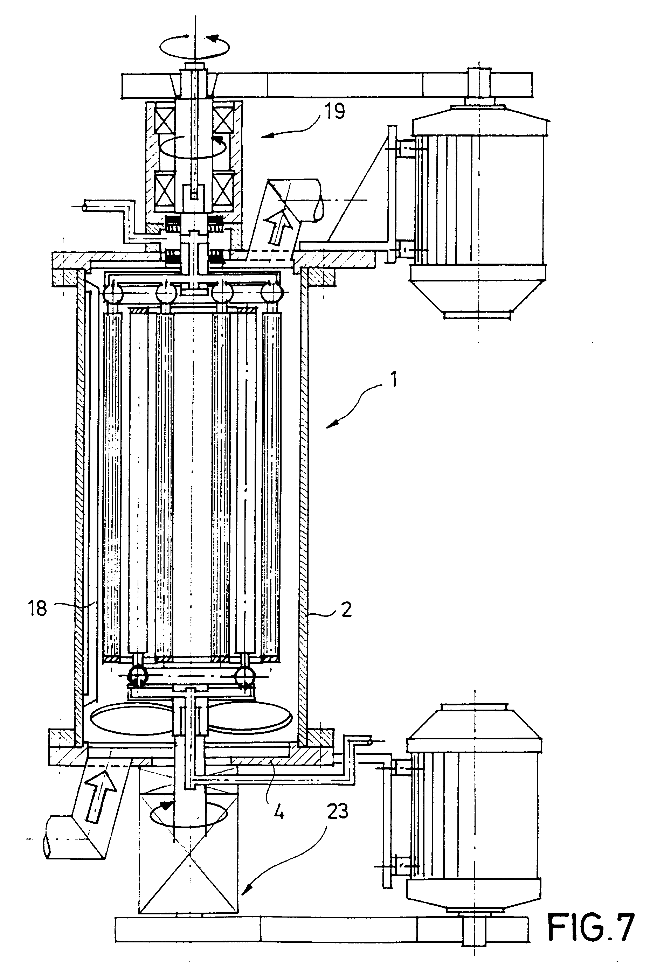

Die Ausführungsform nach Fig. 7 gleicht der nach Fig. 6 weitestgehend, allerdings erfolgt bei ihr die Zuführung der zu filternden Flüssigkeit durch die untere Stirnwand 4 des Behälters 1, die im dargestellten Beispiel eben ausgeführt ist.

Es ist anzumerken, daß bei den Ausführungsformen nach den Fig. 6 und 7 an der Innenseite des Behältermantels 2 sich achsparallel erstreckende Strömungsstörer 18 vorhanden sind.

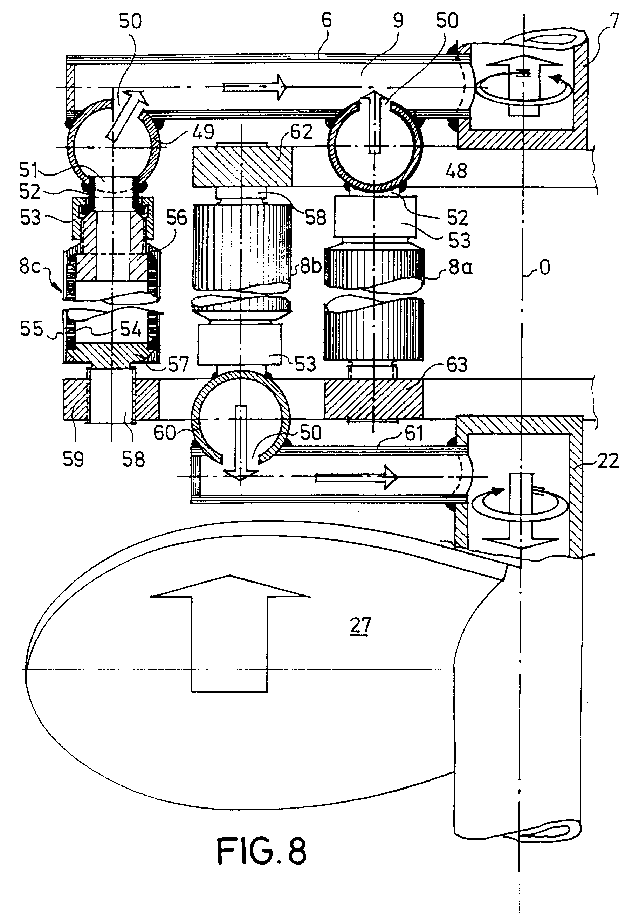

Fig. 8 zeigt Details einer ersten Ausführungsform von Filterkörpern und ihrer Befestigung bei einer Filtervorrichtung mit Gruppen gegensinnig umlaufender Filterkörper. Gemäß Fig. 8 ist an einer ersten Hohlwelle 7 ein rohrförmiger Querträger 6 als Teil einer ersten Tragvorrichtung befestigt, dessen Innenraum 9 mit dem Innenraum der Hohlwelle 7 verbunden ist. An dem Querträger 6 sind konzentrisch zur Umlaufachse der Hohlwelle 7, die mit der Behälterachse O zusammenfällt, zwei Ringrohre 48 und 49 befestigt, die Kreise unterschiedlicher Durchmesser definieren, auf denen eine erste Gruppe und eine dritte Gruppe von Filterkörpern 8a und 8b angeordnet sind. Die Ringrohre 48 und 49 weisen Öffnungen 50 auf, mit denen ihre Innenräume mit dem Innenraum 9 des Querträgers 6 in Verbindung stehen. An jeder Stelle, wo ein Filterkörper mit einem Ringrohr verbunden ist, weist das Ringrohr eine Bohrung 51 auf, in der ein Anschlußstutzen 52 befestigt ist, der eine Überwurfmutter 53 trägt.

Ein Filterkörper besteht aus einem perforierten Rohr 54, das auf seiner Außenseite ein Filtermedium 55 trägt. In das perforierte Rohr 54 ist am einen Ende eine Büchse 56 eingesteckt und befestigt, die aus dem Rohr 54 vorsteht und ein Gewinde trägt, auf das die Überwurfmutter 53 aufgeschraubt ist. Am anderen Ende ist am Rohr 54 ein Verschlußdeckel 57 befestigt, von dem aus sich ein Gewindezapfen 58 erstreckt. Der Gewindezapfen 58 ist in eine Gewindebohrung eingeschraubt, die in einem Trägerring 59 ausgebildet ist, der allen Filterkörpern 8c gemeinsam ist. Die Darstellung ist in Fig. 8 am Beispiel des Filterkörpers 8c gegeben. Sie ist beim Filterkörper 8a völlig vergleichbar und trifft auch auf den Filterkörper 8b zu mit der Ausnahme, daß dieser an einem Ringrohr 60 befestigt ist, das einen Kreis definiert, dessen Radius zwischen dem der Kreise liegt, die von den Ringrohren 48 und 49 definiert werden. Dieses Ringrohr 60 ist auf einem rohrförmigen Querträger 61 befestigt, der seinerseits an der zweiten Hohlwelle 22 befestigt ist. Der Innenraum des Ringrohrs 60 steht über eine Öffnung mit dem Innenraum des Querträgers 61 in Verbindung, der seinerseits mit dem Innenraum der Hohlwelle 22 in Verbindung ist. Der Gewindezapfen 58 des Filterkörpers 8b ist in eine Gewindebohrung in einem zweiten Tragring 62 eingeschraubt, der zwischen den Ringrohren 48 und 49 verläuft.

Zum Lösen der Filterkörper brauchen lediglich die Überwurfmuttern 53 gelöst zu werden, und anschließend können die Filterkörper von den sie haltenden Tragringen 59 bzw. 62 abgeschraubt werden. Es ist anzumerken, daß für die Filterkörper 8a ein entsprechender Tragring 63 vorgesehen ist, der von dem Tragring 59 verschieden ist.

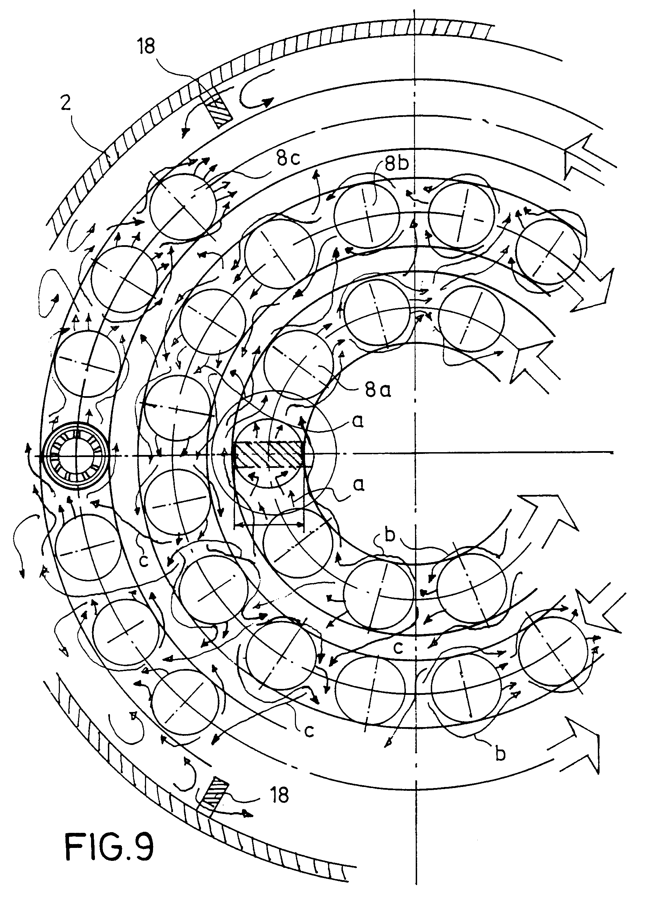

Fig. 9 zeigt schematisch im Radialschnitt die Strömungsverhältnisse, die sich beim gegensinnigen Umlaufen der Filterkörper 8a und 8c bzw. 8b in der zu filternden Flüssigkeit einstellen. Man erkennt die innere Gruppe von Filterkörpern 8a, die entgegen dem Uhrzeigersinn umläuft, die mittlere Gruppe von Filterkörpern 8b, die im Uhrzeigersinn umläuft, und die äußere Gruppe von Filterkörpern 8c, die entgegen dem Uhrzeigersinn umläuft, sowie Strömungsstörer 18 an der Innenwand des Behältermantels 2. Ein umlaufender Filterkörper stellt der Flüssigkeit aufgrund seiner Umlaufbewegung einen wirksamen Querschnitt entgegen, der von seinem Durchmesser bestimmt ist und in Fig. 8 am Beispiel eines der Filterkörper 8a dargestellt ist. Man erkennt Strömungskomponenten a, die direkt auf die in Umlaufrichtung der Filterkörper vorne liegenden Seiten gerichtet sind, Strömungskomponenten b, die an den Filterkörpern entgegen der Umlaufrichtung seitlich vorbeiströmen, und in etwa radialer Richtung verlaufende Strömungskomponenten c, die nach außen gerichtet zwischen den Filterkörpern hindurchströmen. Diese vielfältigen Strömungskomponenten bewirken eine weitgehend gleichmäßige Umspülung der Filterkörper, und mit den schon erwähnten zyklischen Druckstößen, die beim Aneinandervorbeilaufen gegensinnig umlaufender Filterkörper erzeugt werden, wird eine Abscheidung von Sedimenten auf den Filterkörpern weitgegehend unterbunden. Die Strömungsstörer 18 verhindern, daß im wandnahen Bereich des Behälters die Flüssigkeit zu sehr in Rotation gerät und dadurch die Relativgeschwindigkeit zwischen der zu filternden Flüssigkeit und den Filterkörpern 8c der äußeren Gruppe verlorengeht.

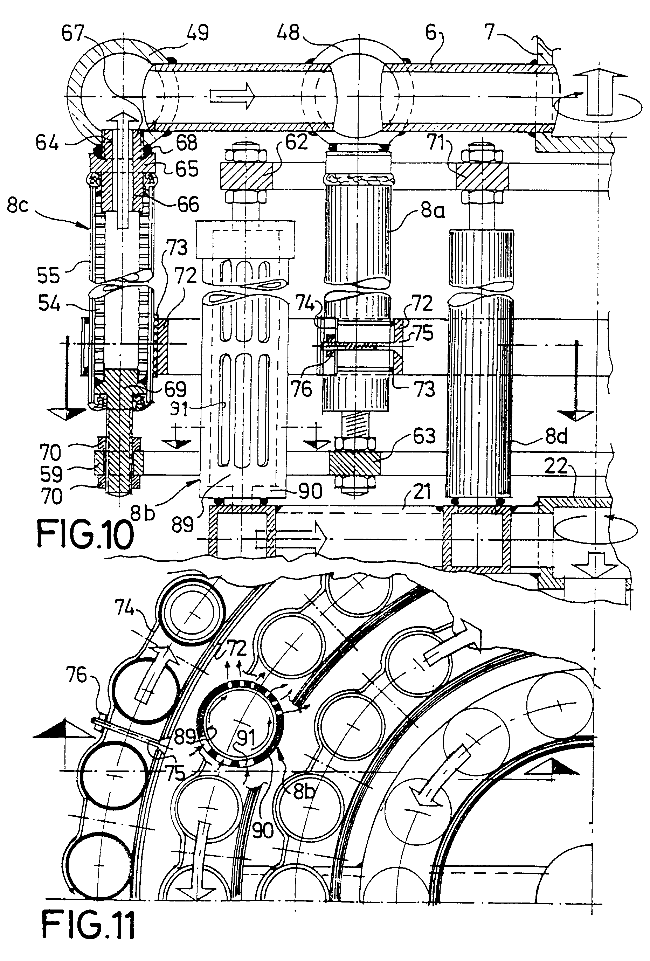

Fig. 10 zeigt eine zweite Ausführungsform der Halterung von gegensinnig umlaufenden Filterkörpern an den sie tragenden Hohlwellen. Gemäß Fig. 10 sind an einem ersten rohrförmigen Querträger zwei Ringrohe 48 und 49 unterschiedlicher Krümmungsradien befestigt, wobei der rohrförmige Querträger 6 das Ringrohr 48 durchdringt und in das Ringrohr 49 eindringt, sich in das Ringrohr 49 öffnet und innerhalb des Ringrohres 48 Querbohrungen (nicht dargestellt) aufweist, um eine Strömungsverbindung zwischen den Innenräumen des Querträgers 6 und den Ringrohen 48 und 49 herzustellen. Die Ringrohre 48 und 49 weisen Gewindebohrungen 64 für jeden Filterkörper auf.

Jeder Filterkörper besteht aus einem perforierten Rohr 54 und einem darauf angebrachten Filtermedium 55. In das perforierte Rohr 54 ist am einen Ende eine mit einem Bund 65 versehene Büchse 66 eingesteckt, die an dem Rohr 54 fest angebracht ist. Von dem Bund 65 erstreckt sich ein Gewindezapfen 67, der unter Zwischenlage eines Dichtungsrings 68 in die Gewindebohrung 64 eingeschraubt ist. Am anderen Ende ist in das Rohr 54 ein Verschlußzapfen 69 eingesteckt und befestigt, dessen aus dem Rohr 54 vorstehendes Ende ein Gewinde trägt und mit Hilfe von Muttern 70 an einem Tragring 59 befestigt ist, der entsprechende Bohrungen aufweist. Die gleiche Befestigungssart gilt für die an dem Ringrohr 48 befestigten Filterkörper 8a.

Die Ausführungsform nach Fig. 10 weist zusätzlich zu einer zweiten Gruppe von Filterkörpern 8b eine vierte Gruppe von Filterkörpern 8d auf. Diese Filterkörper sind an einem rohrförmigen Querträger 21 verschraubt, der an der zweiten Hohlwelle 22 befestigt ist. Die anderen Enden der Filterkörper 8b und 8d sind an Tragringen 62 bzw. 71 verschraubt vergleichbar den Tragringen 59 und 63. Die Konstruktion ist dazu vorgesehen, daß die an dem Querträger 6 befestigten Filterkörper 8a und 8c gegensinnig zu den am Querträger 21 befestigten Filterkörpern 8b und 8d umlaufen.

Fig. 10 zeigt außerdem eine alternative Ausführungsform eines Filterkörpers. Diese Ausführungsform ist durch den Filterkörper 8b dargestellt. Er besteht aus einem mit Schraubanschlüssen vergleichbar dem Filterkörper 8c versehenen Filterelement 89, über das eine starre Schonhülse 90 geschoben ist, die relativ breite Durchbrüche 91 aufweist, um einen möglichst ungehinderten Zutritt der zu filternden Flüssigkeit zu dem Filterlement 89 sicherzustellen. Diese Konstruktion ist besonders für solche Einsatzzwecke vorgesehen, wo die Filterelemente keramisch sind oder vergleichbar bruchempfindlich sind und somit keinen seitlich wirkenden Kräften widerstehen können, wie sie im Betrieb der Filtervorrichtung als Fliehkräfte auftreten. Die starre Schonhülse 90 nimmt solche Kräfte auf und schont das Filterelement 89.

Fig. 10 und Fig. 11, die eine Radialschnittdarstellung von Fig. 10 zeigt, offenbaren weiterhin eine gegenseitige Abstützung der Filterkörper einer Gruppe aneinander. Zu diesem Zweck ist ein Reifen 72 vorgesehen, der innerhalb des von der Filterkörpergruppe beschriebenen Kreises verläuft und an dem die Filterkörper mit ihrer der Umlaufachse O zugewandten Seite anliegen, wobei ein Zwischenlagepolster 72 aus einem weichen Material zwischengelegt sein kann, um Beschädigungen des Filtermediums 55 durch den Reifen 72 zu vermeiden. Von außen legt sich an die Filterkörper ein Spannring 74 an, der mittels Spannschrauben 75 und Muttern 76 mit dem Reifen 72 verbunden ist. Diese Konstruktion sichert die Filterkörper gegen eine Ausbiegung unter dem Einfluß von Fliehkräften beim Umlauf, was es möglich macht, relativ lange, schlanke Filterkörper einzusetzen. Ggf. können mehrerer solcher Reifen und Spannringkonstruktionen an einer Filterkörpergruppe über die Länge der Filterkörper verteilt angeordnet sein.

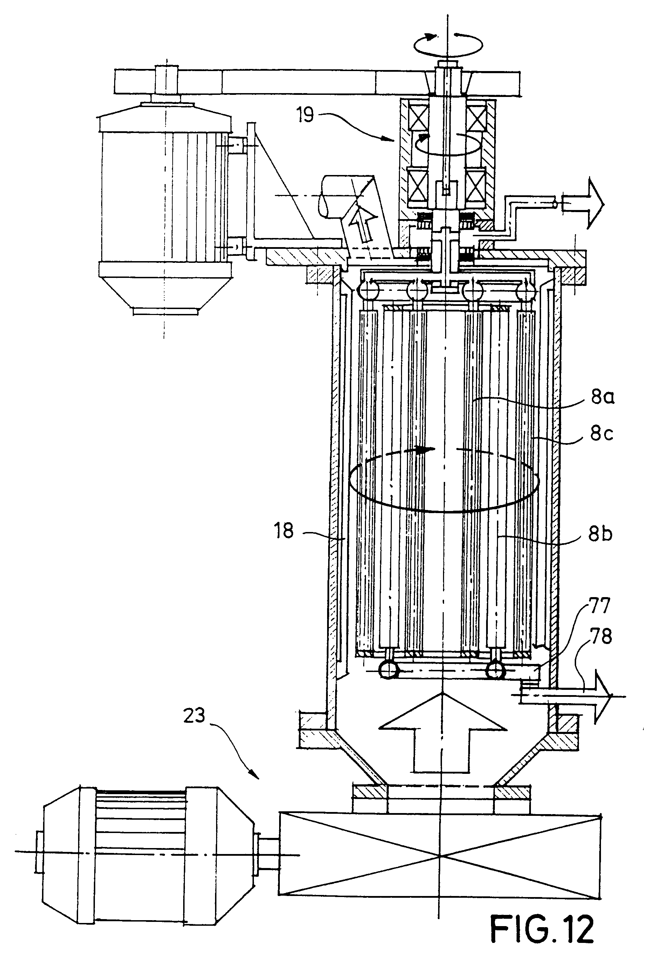

Fig. 12 zeigt eine Ausführungsform der Erfindung, die sich von der nach Fig. 7 im wesentlichen dadurch unterscheidet, daß die zwischen dem äußeren und inneren Ring von Filterkörpern 8c und 8a auf einem Ring angeordneten Filterkörper 8b an einem stationären, rohrförmigen Träger 77 befestigt sind, der mit einem Auslaß 78 für von den Filterkörpern 8b abgegebenes Filtrat verbunden ist. Auch diese Filtervorrichtung liefert brauchbare Filtrierdurchsätze bei vermindertem apparativem Aufwand.

## Patentansprüche (Patentansprüche für folgende(n) Vertragsstaat(en): AT, BE, DK, GR, IT, NL, PT, SE)

1. Filtervorrichtung, bestehend aus einem zylindrischen Behälter (1), Einrichtungen (17,14) zum Einleiten einer zu filternden Flüssigkeit unter Druck in den Behälter (1), wenigstens einem Rotor (5), der in dem Behälter (1) konzentrisch angeordnet und von einem Drehantrieb (19) um die Behälterachse (O) rotierend angetrieben ist, wobei der Rotor (5) aus einer in einer Stirnwand (3) des Behälters (1) drehbar gelagerten Hohlwelle (7), einer daran befestigten sich radial erstreckenden Tragvorrichtung (6) und einer Vielzahl auf wenigstens einem geschlossenen, zur Behälterachse (O) konzentrischen Kreis angeordneten, sich parallel zur Behälterachse (O) erstreckenden, schlanken, rohrförmigen Filterkörpern (8) besteht, deren eine Enden an der Tragvorrichtung (6) befestigt sind und deren Innenräume über in der Tragvorrichtung (6) ausgebildte Kanäle (9) mit dem Innenraum der Hohlwelle (7) verbunden sind, der seinerseits mit einem Auslaß (11) für aus den Filterkörpern (8) abfließendes Filtrat verbunden ist.

2. Filtervorrichtung nach Anspruch 1, dadurch gekennzeichnet, daß die der Tragvorrichtung (6) abgewandten Enden der Filterkörper (8) an einem gemeinsamen Ring (59;62;63) befestigt sind.

3. Filtervorrichtung nach Anspruch 1, dadurch gekennzeichnet, daß die Filterkörper (8) zylindrisch ausgebildet und auf mehreren konzentrischen Kreisen in jeweils gleicher Anzahl angeordnet sind und die Durchmesser der Filterkörper (8a,8b,8c) mit zunehmendem Radius der Kreise, auf denen sie jeweils angeordnet sind, zunehmen, um im wesentlichen gleiche Abstände zwischen benachbarten Filterkörpern zu erzielen.

4. Filtervorrichtung nach Anspruch 3, dadurch gekennzeichnet, daß die der Tragvorrichtung (6) abgewandten Enden aller Filterkörper (8a,8b,8c) von einer gemeinsamen Tragplatte (12) gehalten sind, die zwischen den Filterkörpern mit Perforationen versehen ist und die in ihrem Zentrum eine Nabe (13) aufweist, die auf einem in einer Gehäusestirnwand (4) befestigten Stutzen (14) drehbar gelagert ist.

5. Filtervorrichtung nach Anspruch 1, dadurch gekennzeichnet, daß konzentrisch zu den auf einem Kreisring angeordneten, eine erste Gruppe bildenden Filterkörpern (8) eine zweite Gruppe von Filterkörpern (20) auf einem zweiten Kreisring angeordnet ist, wobei die Filterkörper (20) der zweiten Gruppe von einer zweiten Tragvorrichtung (21) gehalten sind, die sich radial von einer sie tragenden zweiten Hohlwelle (22) erstreckt, die in einer der Gehäusestirnwände (4) drehbar gelagert ist und von einem Drehantrieb (23) gegenläufig zu der ersten Hohlwelle (7) angetrieben ist, und wobei die Innenräume der Filterkörper (20) der zweiten Gruppe über Kanäle in der zweiten Tragvorrichtung (21) mit dem Innenraum der zweiten Hohlwelle (22) verbunden sind, die ihrerseits einen Auslaß für aus den Filterkörpern (20) der zweiten Gruppe abfließendes Filtrat verbunden ist.

6. Filtervorrichtung nach Anspruch 5, dadurch gekennzeichnet, daß konzentrisch zu der zweiten Gruppe Filterkörper (8b) eine dritte Gruppe auf einem Kreisring angeordneter Filterkörper (8c) vorhanden ist, die an der Tragvorrichtung (6) der Filterkörper (8a) der ersten Gruppe befestigt ist, wobei die Filterkörper (8b) der zweiten Gruppe sich zwischen den Filterkörpern (8a,8c) der ersten und dritten Gruppen befinden.

7. Filtervorrichtung nach einem der vorhergehenden Ansprüche, dadurch gekennzeichnet, daß an der Innenseite der Mantelwand (2) des Behälters (1) sich im wesentlichen axial erstreckende Strömungsstörer (18) befestigt sind, die einem Umlaufen der zu filternden Flüssigkeit mit den Filterkörpern (8) der äußersten Gruppe entgegenwirken.

8. Filtervorrichtung nach einem der vorhergehenden Ansprüche, dadurch gekennzeichnet, daß die Tragvorrichtungen (6,21) jeweils aus mehreren sich von der Hohlwelle (7;22) radial erstreckenden Rohren (6;61) und einem an diesem befestigten ringförmigen Rohr (48,49,60) für jede Gruppe von Filterkörpern (8a,8c,8b) bestehen, wobei die Innenräume der radialen Rohre (6,61) mit dem Innenraum der sie tragenden Hohlwelle (7,22) und dem Innenraum des ringförmigen Rohres (48,49,60) verbunden sind und die Filterkörper (8a,8b,8c) an dem ringförmigen Rohr (48,49,60) befestigt sind.

9. Filtervorrichtung nach einem der vorhergehenden Ansprüche, dadurch gekennzeichnet, daß in dem Behälter (1) nahe der einen Stirnwand (4) ein Rührer (27) angeordnet ist, der eine in axialer Richtung verlaufende Strömungskomponente in der zu filternden Flüssigkeit hervorruft.

10. Filtervorrichtung nach einem der vorhergehenden Ansprüche, dadurch gekennzeichnet, daß die Filterkörper (8) einer auf einem gemeinsamen Kreis angeordneten Gruppe an ihrer der Behälterachse (O) zugewandten Seite an wenigstens einem gemeinsamen Reifen (72) anliegen, an dem sie mittels eines die Gruppe umschlingenden Spannrings (74) und mehreren, den Spannring (74) mit dem Reifen (72) verbindenden Spannschrauben (75) festgehalten sind.

11. Filtervorrichtung nach Anspruch 5, dadurch gekennzeichnet, daß die beiden Hohlwellen (7,22) konzentrisch ineinander angeordnet sind und dieselbe Behälterstirnwand (3) durchdringen.

12. Filtervorrichtung nach Anspruch 5, dadurch gekennzeichnet, daß die beiden Hohlwellen (7,22) einander gegenüberstehen und jeweils eine der Behälterstirnwände (3,4) durchdringen.

13. Filtervorrichtung nach Anspruch 12, dadurch gekennzeichnet, daß auf einer der Hohlwellen ein eine axiale Strömungskomponente in der zu filternden Flüssigkeit hervorrufender Rührer (27) nahe der einen Behälterstirnwand (4) befestigt ist.

14. Filtervorrichtung nach Anspruch 1, dadurch gekennzeichnet, daß konzentrisch zu der auf einem Kreisring angeordneten, eine erste Gruppe bildenden Filterkörpern (8a) eine zweite Gruppe von Filterkörpern (8b) auf einem zweiten Kreisring angeordnet ist, wobei die zweite Gruppe in dem Behälter (1) stationär gehalten ist und mit einer Ableiteinrichtung (77) für aus den Filterkörpern (8b) der zweiten Gruppe abfließendes Filtrat verbunden ist.

15. Filtervorrichtung nach einem der Ansprüche 1 bis 10, dadurch gekennzeichnet, daß die Filterkörper (8) an der Tragvorrichtung (6,61) mit Hilfe von Überwurfmuttern (53) gehalten sind, die auf an den Filterkörpern (8) ausgebildeten Gewinden geschraubt sind.

16. Filtervorrichtung nach einem der vorhergehenden Ansprüche, dadurch gekennzeichnet, daß die Filterkörper (8) jeweils aus einem perforierten, endseitig gegen den Innenraum des Behälters (1) verschlossenen Rohr (54) und einem auf der Außenseite des Rohrs (54) angeordneten, schlauchförmigen Filtermedium (5) bestehen.

17. Filtervorrichtung nach Anspruch 16, dadurch gekennzeichnet, daß die Filtermedien (55) an ihren Enden jeweils an dem perforierten Rohr (54) des Filterkörpers (8) oder einem das Rohr tragenden Halter (56,57) befestigt sind.

18. Filtervorrichtung nach Anspruch 16 oder 17, dadurch gekennzeichnet, daß in das perforierte Rohr (54) jedes Filterkörpers (8) am einen Ende eine mit einem vorstehenden Bund (65) versehene Büchse (66) eingesteckt ist, die mit dem Rohr (54) fest verbunden ist und einen von dem Bund (65) wegstehenden freien Endabschnitt (67) aufweist, der mit einem Außengewinde versehen ist und in eine Gewindebohrung (64) in der Tragvorrichtung (6,48,49) geschraubt ist.

19. Filtervorrichtung nach Anspruch 16 oder 17, dadurch gekennzeichnet, daß in das perforierte Rohr (54) jedes Filterkörpers (8) am der Tragvorrichtung (6) abgewandten Ende ein Zapfen (69) eingesteckt ist, der mit dem Rohr (54) fest verbunden ist und der einen aus dem Rohr (54) vorstehenden, mit einem Gewinde versehenen Endabschnitt aufweist, der mittels Muttern (70) an dem gemeinsamen Ring (59) bzw. der Tragplatte (12) befestigt ist.

20. Filtervorrichtung nach einem der Ansprüche 1 bis 18, dadurch gekennzeichnet, daß die Filterkörper (8) jeweils aus einem Filterelement (89) und einer darübergestülpten starren Schonhülse (90) mit relativ breiten Durchbrüchen (91) besteht.

21. Filtervorrichtung nach Anspruch 20, dadurch gekennzeichnet, daß das Filterlement (89) ein Keramikrohr ist.

22. Filtervorrichtung nach einem der Ansprüche 1 bis 15, dadurch gekennzeichnet, daS die Filterkörper eine Querschnittsgestalt aufweisen, die ausgewählt ist aus: Kreis, Polygon, Linsenform.

## Patentansprüche (Patentansprüche für folgende(n) Vertragsstaat(en): CH, DE, ES, FR, GB, LI)

1. Filtervorrichtung, bestehend aus einem zylindrischen Behälter (1), Einrichtungen (17,14) zum Einleiten einer zu filternden Flüssigkeit unter Druck in den Behälter (1), wenigstens einem Rotor (5), der in dem Behälter (1) konzentrisch angeordnet und von einem Drehantrieb (19) um die Behälterachse (O) rotierend angetrieben ist, wobei der Rotor (5) aus einer in einer Stirnwand (3) des Behälters (1) drehbar gelagerten Hohlwelle (7), einer daran befestigten sich radial erstreckenden Tragvorrichtung (6) und einer Vielzahl auf wenigstens einem geschlossenen, zur Behälterachse (O) konzentrischen Kreis angeordneten, sich parallel zur Behälterachse (O) erstreckenden, schlanken, rohrförmigen Filterkörpern (8) besteht, deren eine Enden an der Tragvorrichtung (6) befestigt sind und deren Innenräume über in der Tragvorrichtung (6) ausgebildte Kanäle (9) mit dem Innenraum der Hohlwelle (7) verbunden sind, der seinerseits mit einem Auslaß (11) für aus den Filterkörpern (8) abfließendes Filtrat verbunden ist, und wobei an der Innenseite der Mantelwand (2) des Behälters (1) sich im wesentlichen axial erstreckende Strömungsstörer (18) befestigt sind, die einem Umlaufen der zu filternden Flüssigkeit mit den Filterkörpern (8) der äußersten Gruppe entgegenwirken.

2. Filtervorrichtung nach Anspruch 1, dadurch gekennzeichnet, daß die der Tragvorrichtung (6) abgewandte Enden der Filterkörper (8) an einem gemeinsamen Ring (59;62;63) befestigt sind.

3. Filtervorrichtung nach Anspruch 1, dadurch gekennzeichnet, daß die Filterkörper (8) zylindrisch ausgebildet und auf mehreren konzentrischen Kreisen in jeweils gleicher Anzahl angeordnet sind und die Durchmesser der Filterkörper (8a,8b,8c) mit zunehmendem Radius der Kreise, auf denen sie jeweils angeordnet sind, zunehmen, um im wesentlichen gleiche Abstände zwischen benachbarten Filterkörpern zu erzielen.

4. Filtervorrichtung nach Anspruch 3, dadurch gekennzeichnet, daß die der Tragvorrichtung (6) abgewandten Enden aller Filterkörper (8a,8b,8c) von einer gemeinsamen Tragplatte (12) gehalten sind, die zwischen den Filterkörpern mit Perforationen versehen ist und die in ihrem Zentrum eine Nabe (13) aufweist, die auf einem in einer Gehäusestirnwand (4) befestigten Stutzen (14) drehbar gelagert ist.

5. Filtervorrichtung nach Anspruch 1, dadurch gekennzeichnet, daß konzentrisch zu den auf einem Kreisring angeordneten, eine erste Gruppe bildenden Filterkörpern (8) eine zweite Gruppe von Filterkörpern (20) auf einem zweiten Kreisring angeordnet ist, wobei die Filterkörper (20) der zweiten Gruppe von einer zweiten Tragvorrichtung (21) gehalten sind, die sich radial von einer sie tragenden zweiten Hohlwelle (22) erstreckt, die in einer der Gehäusestirnwände (4) drehbar gelagert ist und von einem Drehantrieb (23) gegenläufig zu der ersten Hohlwelle (7) angetrieben ist, und wobei die Innenräume der Filterkörper (20) der zweiten Gruppe über Kanäle in der zweiten Tragvorrichtung (21) mit dem Innenraum der zweiten Hohlwelle (22) verbunden sind, die ihrerseits einen Auslaß für aus den Filterkörpern (20) der zweiten Gruppe abfließendes Filtrat verbunden ist.

6. Filtervorrichtung nach Anspruch 5, dadurch gekennzeichnet, daß konzentrisch zu der zweiten Gruppe Filterkörper (8b) eine dritte Gruppe auf einem Kreisring angeordneter Filterkörper (8c) vorhanden ist, die an der Tragvorrichtung (6) der Filterkörper (8a) der ersten Gruppe befestigt ist, wobei die Filterkörper (8b) der zweiten Gruppe sich zwischen den Filterkörpern (8a,8c) der ersten und dritten Gruppen befinden.

7. Filtervorrichtung nach einem der vorhergehenden Ansprüche, dadurch gekennzeichnet, daS die Tragvorrichtungen (6,21) jeweils aus mehreren sich von der Hohlwelle (7;22) radial erstreckenden Rohren (6;61) und einem an diesem befestigten ringförmigen Rohr (48,49,60) für jede Gruppe von Filterkörpern (8a,8c,8b) bestehen, wobei die Innenräume der radialen Rohre (6,61) mit dem Innenraum der sie tragenden Hohlwelle (7,22) und dem Innenraum des ringförmigen Rohres (48,49,60) verbunden sind und die Filterkörper (8a,8b,8c) an dem ringförmigen Rohr (48,49,60) befestigt sind.

8. Filtervorrichtung nach einem der vorhergehenden Ansprüche, dadurch gekennzeichnet, daß in dem Behälter (1) nahe der einen Stirnwand (4) ein Rührer (27) angeordnet ist, der eine in axialer Richtung verlaufende Strömungskomponente in der zu filternden Flüssigkeit hervorruft.

9. Filtervorrichtung nach einem der vorhergehenden Ansprüche, dadurch gekennzeichnet, daß die Filterkörper (8) einer auf einem gemeinsamen Kreis angeordneten Gruppe an ihrer der Behälterachse (O) zugewandten Seite an wenigstens einem gemeinsamen Reifen (72) anliegen, an dem sie mittels eines die Gruppe umschlingenden Spannrings (74) und mehreren, den Spannring (74) mit dem Reifen (72) verbindenden Spannschrauben (75) festgehalten sind.

10. Filtervorrichtung nach Anspruch 5, dadurch gekennzeichnet, daß die beiden Hohlwellen (7,22) konzentrisch ineinander angeordnet sind und dieselbe Behälterstirnwand (3) durchdringen.

11. Filtervorrichtung nach Anspruch 5, dadurch gekennzeichnet, daß die beiden Hohlwellen (7,22) einander gegenüberstehen und jeweils eine der Behälterstirnwände (3,4) durchdringen.

12. Filtervorrichtung nach Anspruch 11, dadurch gekennzeichnet, daß auf einer der Hohlwellen ein eine axiale Strömungskomponente in der zu filternden Flüssigkeit hervorrufender Rührer (27) nahe der einen Behälterstirnwand (4) befestigt ist.

13. Filtervorrichtung nach Anspruch 1, dadurch gekennzeichnet, daß konzentrisch zu der auf einem Kreisring angeordneten, eine erste Gruppe bildenden Filterkörpern (8a) eine zweite Gruppe von Filterkörpern (8b) auf einem zweiten Kreisring angeordnet ist, wobei die zweite Gruppe in dem Behälter (1) stationär gehalten ist und mit einer Ableiteinrichtung (77) für aus den Filterkörpern (8b) der zweiten Gruppe abfließendes Filtrat verbunden ist.

14. Filtervorrichtung nach einem der Ansprüche 1 bis 9, dadurch gekennzeichnet, daß die Filterkörper (8) an der Tragvorrichtung (6,61) mit Hilfe von Überwurfmuttern (53) gehalten sind, die auf an den Filterkörpern (8) ausgebildeten Gewinden geschraubt sind.

15. Filtervorrichtung nach einem der vorhergehenden Ansprüche, dadurch gekennzeichnet, daß die Filterkörper (8) jeweils aus einem perforierten, endseitig gegen den Innenraum des Behälters (1) verschlossenen Rohr (54) und einem auf der Außenseite des Rohrs (54) angeordneten, schlauchförmigen Filtermedium (5) bestehen.

16. Filtervorrichtung nach Anspruch 15, dadurch gekennzeichnet, daß die Filtermedien (55) an ihren Enden jeweils an dem perforierten Rohr (54) des Filterkörpers (8) oder einem das Rohr tragenden Halter (56,57) befestigt sind.

17. Filtervorrichtung nach Anspruch 15 oder 16, dadurch gekennzeichnet, daß in das perforierte Rohr (54) jedes Filterkörpers (8) am einen Ende eine mit einem vorstehenden Bund (65) versehene Büchse (66) eingesteckt ist, die mit dem Rohr (54) fest verbunden ist und einen von dem Bund (65) wegstehenden freien Endabschnitt (67) aufweist, der mit einem Außengewinde versehen ist und in eine Gewindebohrung (64) in der Tragvorrichtung (6,48,49) geschraubt ist.

18. Filtervorrichtung nach Anspruch 15 oder 16, dadurch gekennzeichnet, daß in das perforierte Rohr (54) jedes Filterkörpers (8) am der Tragvorrichtung (6) abgewandten Ende ein Zapfen (69) eingesteckt ist, der mit dem Rohr (54) fest verbunden ist und der einen aus dem Rohr (54) vorstehenden, mit einem Gewinde versehenen Endabschnitt aufweist, der mittels Muttern (70) an dem gemeinsamen Ring (59) bzw. der Tragplatte (12) befestigt ist.

19. Filtervorrichtung nach einem der Ansprüche 1 bis 17, dadurch gekennzeichnet, daß die Filterkörper (8) jeweils aus einem Filterelement (89) und einer darübergestülpten starren Schonhülse (90) mit relativ breiten Durchbrüchen (91) besteht.

20. Filtervorrichtung nach Anspruch 19, dadurch gekennzeichnet, daß das Filterlement (89) ein Keramikrohr ist.

21. Filtervorrichtung nach einem der Ansprüche 1 bis 14, dadurch gekennzeichnet, daß die Filterkörper eine Querschnittsgestalt aufweisen, die ausgewählt ist aus: Kreis, Polygon, Linsenform.

## Claims (Claims for the following Contracting State(s): AT, BE, DK, GR, IT, NL, PT, SE)

1. A filter apparatus comprising a cylindrical casing (1), means (17, 14) for pressure-feeding a liquid to be filtered to said casing (1), at least one rotor (5) mounted concentrically in said casing (1) and coupled to rotary drive means (19) for rotating it about the axis (O) of said casing, said rotor (5) being composed of a hollow shaft (7) rotatably mounted in an end wall (3) of said casing (1) and having secured thereto a radially extending carrier device (6), and a plurality of slender tubular filter bodies (8) disposed in at least one closed circular array concentric with the casing axis (O), and extending parallel thereto, with one of their ends secured to said carrier device (6) and their interiors communicating with the interior of said hollow shaft (7) through passages (9) formed in said carrier device (6), the interior of said hollow shaft (7) on its part communicating with an outlet (11) for filtrate draining from said filter bodies (8).

2. A filter apparatus according to claim 1, characterized in that the ends of said filter bodies (8) facing away from said carrier device (6) are secured to a ring (59; 62; 63) common to all of them.

3. A filter apparatus according to claim 1, characterized in that said filter bodies (8) are of cylindrical configuration, with equal numbers of them disposed in each of several concentric arrays, the diameters of said filter bodies (8a, 8b, 8c) increasing with the increase of the radius of the circular arrays containing them, so as to obtain substantially equal spacings between adjacent filter bodies.

4. A filter apparatus according to claim 3, characterized in that the ends of all filter bodies (8a, 8b, 8c) facing away from said carrier device (6) are retained by a common carrier disc (12) provided with perforations between said filter bodies and having at its center a hub (13) rotatably mounted on a socket (14) secured in a casing end wall (4).

5. A filter apparatus according to claim 1, characterized in that a second group of filter bodies (20) is disposed in a circular array concentric with a circular array formed of a first group of filter bodies (8), said filter bodies of said second group being retained by a second carrier device (21) extending radially from and supported by a second hollow shaft (22) rotatably mounted in one of the casing end walls (4) and rotated by rotary drive means in the direction opposite to the rotation of said first hollow shaft (7), the interiors of said filter bodies (20) of the second group communicating through passages in said second carrier device (21) with the interior of said second hollow shaft (22), itself communicating with an outlet for draining the filtrate from the filter bodies (20) of said second group.

6. A filter apparatus according to claim 5, characterized in that there is provided a third group of filter bodies (8c) disposed in a circular array concentric with that of said second group of filter bodies (8b), and secured to said carrier device (8a) of the filter bodies (8b) of said first group, the filter bodies of said second group being disposed between the filter bodies (8a, 8c) of said first and third groups.

7. A filter apparatus according to any of the preceding claims, characterized in that the circumferential sidewall (2) of said casing (1) has secured to its inner face a number of substantially axially extending flow spoilers (18) for preventing the liquid to be filtered from being circumferentially entrained by the revolving filter bodies (8) of the outermost group.

8. A filter apparatus according to any of the preceding claims, characterized in that each carrier device (6, 21) is composed of a plurality of tubular arms (6; 61) extending radially away from the respective hollow shaft (7; 22) and having secured thereto an annular pipe (48, 49, 60) for each group of filter bodies (8a, 8c, 8b), the interiors of said radial tubular arms (6, 61) communicating with the interior of the hollow shaft carrying them, and with the interior of said annular pipe (48, 49, 60), said filter bodies (8a, 8b, 8c) being secured to said annular pipe (48, 49, 60).

9. A filter apparatus according to any of the preceding claims, characterized in that within said casing (1) and adjacent one of its end walls (4) there is provided an agitator (27) acting to create an axially directed flow component in the liquid to be filtered.

10. A filter apparatus according to any of the preceding claims, characterized in that the filter bodies (8) of a group thereof disposed in a common circular array take support with their sides facing towards the casing axis (0) on at least one common hoop (72) whereon they are retained by a clamp ring (74) embracing the respective group, and a plurality of tension screws (75) connecting said clamp ring (74) to said hoop (72).

11. A filter apparatus according to claim 5, characterized in that said two hollow shafts (7, 22) are concentrically nested within one another and extend through one and the same casing end wall (3).

12. A filter apparatus according to claim 5, characterized in that said hollow shafts (7, 22) are disposed to face one another and extend each through one of the casing end walls (3, 4).

13. A filter apparatus according to claim 12, characterized in that one of said hollow shafts carries and agitator (27) secured thereto adjacent a casing end wall (4) and acting to create an axial flow component in the liquid to be filtered.

14. A filter apparatus according to claim 1, characterized in that a second group of filter bodies (8b) is disposed in a second circular array concentric with a circular array of filter bodies forming a first group (8a), said second group being retained stationary in said casing (1) and connected to outlet means (77) for filtrate draining from the filter bodies (8b) of said second group.

15. A filter apparatus according to any of claims 1 to 10, characterized in that said filter bodies (8) are secured to said carrier device (6, 61) by means of sleeve nuts (53) screwed onto threads formed on said filter bodies (8).

16. A filter apparatus according to any of the preceding claims, characterized in that each filter body (8) is composed of a perforated pipe section (54) with closure means between its ends and the interior of said casing (1), and a hose-shaped filter medium (55) disposed on the outer face of said pipe section (54).

17. A filter apparatus according to claim 16, characterized in that said filter media (55) having their respective ends secured to said perforated pipe section (54) of the filter body (8), or to a retainer means (56, 57) carrying said pipe section.

18. A filter apparatus according to claim 16 or 17, characterized in that the perforated pipe section (54) of each filter body (8) has inserted into one of its ends a plug (66) provided with a projecting collar (65), said plug being fixedly secured to said pipe section (54) and having a free end portion projecting from said collar (65) and formed with male screw threads engaged in a threaded bore (64) of said carrier device (6, 48, 49).

19. A filter apparatus according to claim 16 or 17, characterized in that the perforated pipe section (54) of each filter body (8) has inserted into its end facing away from said carrier device (6) a plug (69) fixedly connected to said pipe section (54) and having an end portion projecting from said pipe section and formed with screw threads securing it by means of nuts (70) to said common ring (59) or said carrier disc (12), respectively.

20. A filter apparatus according to any of claims 1 to 18, characterized in that each filter body (8) consists of a filter element (89) enclosed in a rigid support sleeve (90) formed with relatively wide apertures (91).

21. A filter apparatus according to claim 20, characterized in that said filter element (89) is a ceramic pipe section.

22. A filter apparatus according to any of claims 1 to 15, characterized in that said filter bodies have a cross-sectional shape selected from : circular, polygonal, lenticular.

## Claims (Claims for the following Contracting State(s): CH, DE, ES, FR, GB, LI)

1. A filter apparatus comprising a cylindrical casing (1), means (17, 14) for pressure-feeding a liquid to be filtered to said casing (1), at least one rotor (5) mounted concentrically in said casing (1) and coupled to rotary drive means (19) for rotating it about the axis (O) of said casing, said rotor (5) being composed of a hollow shaft (7) rotatably mounted in an end wall (3) of said casing (1) and having secured thereto a radially extending carrier device (6), and a plurality of slender tubular filter bodies (8) disposed in at least one closed circular array concentric with the casing axis (O), and extending parallel thereto, with one of their ends secured to said carrier device (6) and their interiors communicating with the interior of said hollow shaft (7) through passages (9) formed in said carrier device (6), the interior of said hollow shaft (7) on its part communicating with an outlet (11) for filtrate draining from said filter bodies (8), and wherein the circumferential sidewall (2) of said casing (1) has secured to its inner face a number of substantially axially extending flow spoilers (18) for preventing the liquid to be filtered from being circumferentially entrained by the revolving filter bodies (8) of the outermost group.

2. A filter apparatus according to claim 1, characterized in that the ends of said filter bodies (8) facing away from said carrier device (6) are secured to a ring (59; 62; 63) common to all of them.

3. A filter apparatus according to claim 1, characterized in that said filter bodies (8) are of cylindrical configuration, with equal numbers of them disposed in each of several concentric arrays, the diameters of said filter bodies (8a, 8b, 8c) increasing with the increase of the radius of the circular arrays containing them, so as to obtain substantially equal spacings between adjacent filter bodies.

4. A filter apparatus according to claim 3, characterized in that the ends of all filter bodies (8a, 8b, 8c) facing away from said carrier device (6) are retained by a common carrier disc (12) provided with perforations between said filter bodies and having at its center a hub (13) rotatably mounted on a socket (14) secured in a casing end wall (4).

5. A filter apparatus according to claim 1, characterized in that a second group of filter bodies (20) is disposed in a circular array concentric with a circular array formed of a first group of filter bodies (8), said filter bodies of said second group being retained by a second carrier device (21) extending radially from and supported by a second hollow shaft (22) rotatably mounted in one of the casing end walls (4) and rotated by rotary drive means in the direction opposite to the rotation of said first hollow shaft (7), the interiors of said filter bodies (20) of the second group communicating through passages in said second carrier device (21) with the interior of said second hollow shaft (22), itself communicating with an outlet for draining the filtrate from the filter bodies (20) of said second group.

6. A filter apparatus according to claim 5, characterized in that there is provided a third group of filter bodies (8c) disposed in a circular array concentric with that of said second group of filter bodies (8b), and secured to said carrier device (8a) of the filter bodies (8b) of said first group, the filter bodies of said second group being disposed between the filter bodies (8a, 8c) of said first and third groups.

7. A filter apparatus according to any of the preceding claims, characterized in that each carrier device (6, 21) is composed of a plurality of tubular arms (6; 61) extending radially away from the respective hollow shaft (7; 22) and having secured thereto an annular pipe (48, 49, 60) for each group of filter bodies (8a, 8c, 8b), the interiors of said radial tubular arms (6, 61) communicating with the interior of the hollow shaft carrying them, and with the interior of said annular pipe (48, 49, 60), said filter bodies (8a, 8b, 8c) being secured to said annular pipe (48, 49, 60).

8. A filter apparatus according to any of the preceding claims, characterized in that within said casing (1) and adjacent one of its end walls (4) there is provided an agitator (27) acting to create an axially directed flow component in the liquid to be filtered.

9. A filter apparatus according to any of the preceding claims, characterized in that the filter bodies (8) of a group thereof disposed in a common circular array take support with their sides facing towards the casing axis (0) on at least one common hoop (72) whereon they are retained by a clamp ring (74) embracing the respective group, and a plurality of tension screws (75) connecting said clamp ring (74) to said hoop (72).

10. A filter apparatus according to claim 5, characterized in that said two hollow shafts (7, 22) are concentrically nested within one another and extend through one and the same casing end wall (3).

11. A filter apparatus according to claim 5, characterized in that said hollow shafts (7, 22) are disposed to face one another and extend each through one of the casing end walls (3, 4).

12. A filter apparatus according to claim 11, characterized in that one of said hollow shafts carries and agitator (27) secured thereto adjacent a casing end wall (4) and acting to create an axial flow component in the liquid to be filtered.

13. A filter apparatus according to claim 1, characterized in that a second group of filter bodies (8b) is disposed in a second circular array concentric with a circular array of filter bodies forming a first group (8a), said second group being retained stationary in said casing (1) and connected to outlet means (77) for filtrate draining from the filter bodies (8b) of said second group.

14. A filter apparatus according to any of claims 1 to 9, characterized in that said filter bodies (8) are secured to said carrier device (6, 61) by means of sleeve nuts (53) screwed onto threads formed on said filter bodies (8).

15. A filter apparatus according to any of the preceding claims, characterized in that each filter body (8) is composed of a perforated pipe section (54) with closure means between its ends and the interior of said casing (1), and a hose-shaped filter medium (55) disposed on the outer face of said pipe section (54).

16. A filter apparatus according to claim 15, characterized in that said filter media (55) having their respective ends secured to said perforated pipe section (54) of the filter body (8), or to a retainer means (56, 57) carrying said pipe section.

17. A filter apparatus according to claim 15 or 16, characterized in that the perforated pipe section (54) of each filter body (8) has inserted into one of its ends a plug (66) provided with a projecting collar (65), said plug being fixedly secured to said pipe section (54) and having a free end portion projecting from said collar (65) and formed with male screw threads engaged in a threaded bore (64) of said carrier device (6, 48, 49).

18. A filter apparatus according to claim 15 or 16, characterized in that the perforated pipe section (54) of each filter body (8) has inserted into its end facing away from said carrier device (6) a plug (69) fixedly connected to said pipe section (54) and having an end portion projecting from said pipe section and formed with screw threads securing it by means of nuts (70) to said common ring (59) or said carrier disc (12), respectively.

19. A filter apparatus according to any of claims 1 to 17, characterized in that each filter body (8) consists of a filter element (89) enclosed in a rigid support sleeve (90) formed with relatively wide apertures (91).

20. A filter apparatus according to claim 19, characterized in that said filter element (89) is a ceramic pipe section.

21. A filter apparatus according to any of claims 1 to 14, characterized in that said filter bodies have a cross-sectional shape selected from : circular, polygonal, lenticular.

## Revendications (Revendications pour l'(les) Etat(s) contractant(s) suivant(s): AT, BE, DK, GR, IT, NL, PT, SE)

1. Dispositif de filtration, constitué d'une cuve cylindrique (1), de dispositifs (17, 14) servant à introduire sous pression dans la cuve (1) un liquide à filtrer, et d'au moins un rotor (5) qui est disposé dans la cuve (1) suivant le même axe et est entraîné en rotation autour de l'axe (O) de la cuve au moyen d'un dispositif d'entraînement en rotation (19), tandis que ce rotor (5) est constitué d'un arbre creux (7), monté rotatif dans une paroi frontale (3) de la cuve (1), d'un dispositif de support (6), fixé sur cet arbre creux et orienté radialement, et de multiples corps de filtration (8), tubulaires et de forme élancée, qui sont disposés suivant au moins un cercle fermé concentrique à l'axe (O) de la cuve et sont orientés parallèlement à cet axe (O) de la cuve et dont les premières extrémités sont fixées au dispositif de support (6), tandis que les cavités intérieures de ces corps de filtration sont reliées, par l'intermédiaire de conduits (9) réalisés dans le dispositif de support (6), à la lumière de l'arbre creux (7) qui est elle-même reliée à une sortie (11) prévue pour le filtrat sortant des corps de filtration (8).

2. Dispositif de filtration selon la revendication 1, caractérisé en ce que les extrémités des corps de filtration (8) situées à l'opposé du dispositif de support (6) sont fixées sur un anneau commun (59, 62, 63).

3. Dispositif de filtration selon la revendication 1, caractérisé en ce que les corps de filtration (8) sont cylindriques et disposés suivant plusieurs cercles concentriques, en un même nombre sur chaque cercle, et les diamètres des corps de filtration (8a, 8b, 8c) croissent avec le rayon des cercles suivant lesquels ils sont respectivement disposés, de façon à obtenir des espacements pratiquement identiques entre des corps de filtration voisins.

4. Dispositif de filtration selon la revendication 3, caractérisé en ce que les extrémités de tous les corps de filtration (8a, 8b, 8c) qui sont situées à l'opposé du dispositif de support (6) sont maintenues par une plaque de support (12) commune qui est pourvue de perforations entre les corps de filtration et qui comporte en son centre un moyeu (13) qui est monté rotatif sur un tronçon de tube (14) fixé dans une paroi frontale (4) de la cuve.

5. Dispositif de filtration selon la revendication 1, caractérisé en ce que, d'une manière concentrique vis-à-vis des corps de filtration (8) disposés suivant un anneau circulaire qui constituent un premier groupe, un deuxième groupe de corps de filtration (20) est disposé suivant un deuxième anneau circulaire, les corps de filtration (20) du deuxième groupe étant maintenus par un second dispositif de support (21) qui est orienté radialement à partir d'un second arbre creux (22) qui les porte et est monté rotatif dans l'une des parois frontales (4) de la cuve et qui est entraîné par un dispositif d'entraînement en rotation (23) dans un sens opposé au premier arbre creux (7), tandis que les cavités intérieures des corps de filtration (20) du deuxième groupe communiquent, par l'intermédiaire de conduits ménagés dans le second dispositif de support (21), avec la lumière du second arbre creux (22) qui communique elle-même avec une sortie prévue pour le filtrat sortant des corps de filtration (20) du deuxième groupe.

6. Dispositif de filtration selon la revendication 5, caractérisé en ce que, d'une manière concentrique vis-à-vis du deuxième groupe de corps de filtration (8b), il est prévu un troisième groupe de corps de filtration (8c) disposé suivant un anneau circulaire, ce troisième groupe étant fixé au dispositif de support (6) des corps de filtration (8a) du premier groupe, tandis que les corps de filtration (8b) du deuxième groupe sont disposés entre les corps de filtration (8a, 8c) du premier et du troisième groupe.

7. Dispositif de filtration selon l'une des revendications précédentes, caractérisé en ce que des organes gênant l'écoulement (18) orientés d'une manière pratiquement axiale sont fixés sur la face intérieure de l'enveloppe cylindrique (2) de la cuve (1), ces organes (18) s'opposant à ce que les corps de filtration (8) du groupe le plus extérieur entraînent le liquide à filtrer dans leur mouvement de révolution.

8. Dispositif de filtration selon l'une des revendications précédentes, caractérisé en ce que chacun des dispositifs de support (6, 21) est constitué de plusieurs tubes (6, 61), orientés radialement à partir de l'arbre creux (7, 22) associé et d'un tore creux (48, 49, 60) qui est fixé sur ces tubes et qui est prévu pour chaque groupe de corps de filtration (8a, 8b, 8c), tandis que les cavités intérieures des tubes radiaux (6, 61) communiquent avec la lumière de l'arbre creux (7, 22) qui les porte et avec la cavité intérieure du tore creux (48, 49, 60) et que les corps de filtration (8a, 8b, 8c) sont fixés sur le tore creux (48, 49, 60).

9. Dispositif de filtration selon l'une des revendications précédentes, caractérisé en ce qu'un agitateur (27) est disposé dans la cuve (1) au voisinage de l'une (4) des parois frontales, cet agitateur créant dans le liquide à filtrer une composante d'écoulement qui est orientée suivant la direction axiale.

10. Dispositif de filtration selon l'une des revendications précédentes, caractérisé on ce que les corps de filtration (8) d'un groupe disposé suivant un cercle commun prennent appui, par leur côté qui fait face à l'axe (O) de la cuve, sur au moins un cerclage (72) commun sur lequel ils sont immobilisés au moyen d'un anneau de serrage (74), qui ceinture le groupe, et de plusieurs vis de serrage (75) qui relient l'anneau de serrage (74) au cerclage (72).

11. Dispositif de filtration selon la revendication 5, caractérisé en ce que lei deux arbres creux (7, 22) sont disposés l'un dans l'autre suivant le même axe et traversent la même paroi frontale (3) de la cuve.

12. Dispositif de filtration selon la revendication 5, caractérisé en ce que les deux arbres creux (7, 22) sont disposés à l'opposé l'un de l'autre et traversent chacun une paroi frontale (3, 4) respective de la cuve.

13. Dispositif de filtration selon la revendication 12, caractérisé en ce qu'un agitateur (27) provoquant une composante axiale d'écoulement dans le liquide à filtrer est fixé sur l'un des arbres creux du voisinage de l'une (4) des parois frontales de la cuve.

14. Dispositif de filtration selon la revendication 1, caractérisé en ce que, d'une manière concentrique vis-à-vis des corps de filtration (8a) disposés suivant un anneau circulaire qui constituent un premier groupe, un deuxième groupe de corps de filtration (8b) est disposé suivant un deuxième anneau circulaire, le deuxième groupe étant maintenu fixe dans la cuve (1) et étant relié à un dispositif (77) d'évacuation du filtrat sortant des corps de filtration (8b) du deuxième groupe.

15. Dispositif de filtration selon l'une des revendications 1 à 10, caractérisé en ce que les corps de filtration (8) sont maintenus sur le dispositif de support (6, 61) au moyen d'écrous à chapeau (53) qui sont vissés sur des filetages réalisés sur les corps de filtration (8).

16. Dispositif de filtration selon l'une des revendications précédentes, caractérisé en ce que chacun des corps de filtration (8) est constitué d'un tube (54) perforé, qui est formé à ses extrémités vis-à-vis de la cavité intérieure de la cuve (1), et d'un milieu de filtration (55) en forme de tuyau souple qui est disposé sur la face extérieurs du tube (54).

17. Dispositif de filtration selon la revendication 16, caractérisé en ce que chacun des milieux de filtration (55) est fixé à ses extrémités sur le tube perforé (54) du corps de filtration (8) ou sur un élément de support (56, 57) portant le tube.

18. Dispositif de filtration selon la revendication 16 ou 17, caractérisé en ce qu'il est prévu, emboîté dans le tube perforé (54) de chaque corps de filtration (8), à une extrémité, un manchon (66) qui est pourvu d'une collerette (65) en saillie et qui est fixé à demeure sur le tube (54), ce manchon (66) comportant un tronçon d'extrémité (67) qui est libre et fait saillie à partir de la collerette (65) et qui est pourvu d'un filetage extérieur et est vissé dans un alésage fileté (64) pratiqué dans le dispositif de support (6, 48, 49).

19. Dispositif de filtration selon la revendication 16 ou 17, caractérisé en ce qu'il est prévu, emboîté dans le tube perforé (54) de chaque corps de filtration (8), à l'extrémité située à l'opposé du dispositif de support (6), un tronçon de tige (69) qui est fixé à demeure au tube (54) et comporte une section d'extrémité qui fait saillie hors du tube (54) et est pourvue d'un filetage et qui est fixée au moyen d'écrous (70) sur l'anneau (59) commun ou la plaque de support (12).

20. Dispositif de filtration selon l'une des revendications 1 à 18, caractérisé en ce que les corps de filtration (8) sont constitués chacun d'un élément de filtration (89) et d'une gaine de protection (90) rigide qui est enfilée par-dessus cet élément de filtration et qui comporte des ouvertures (91) relativement larges.

21. Dispositif de filtration selon la revendication 20, caractérisé en ce que l'élément de filtration (89) est un tube en céramique.

22. Dispositif de filtration selon l'une des revendications 1 à 15, caractérisé en ce que les corps de filtration ont une forme en coupe transversale qui est choisie parmi des formes circulaire, polygonale, lenticulaire.

## Revendications (Revendications pour l'(les) Etat(s) contractant(s) suivant(s): CH, DE, ES, FR, GB, LI)

1. Dispositif de filtration, constitué d'une cuve cylindrique (1), de dispositifs (17, 14) servant à introduire sous pression dans la cuve (1) un liquide à filtrer, et d'au moins un rotor (5) qui est disposé dans la cuve (1) suivant le même axe et est entraîné en rotation autour de l'axe (O) de la cuve au moyen d'un dispositif d'entraînement en rotation (19), tandis que ce rotor (5) est constitué d'un arbre creux (7), monté rotatif dans une paroi frontale (3) de la cuve (1), d'un dispositif de support (6), fixé sur cet arbre creux et orienté radialement, et de multiples corps de filtration (8), tubulaires et de forme élancée, qui sont disposés suivant au moins un cercle fermé concentrique à l'axe (O) de la cuve et sont orientés parallèlement à cet axe (O) de la cuve et dont les premières extrémités sont fixées au dispositif de support (6), tandis que les cavités intérieures de ces corps de filtration sont reliées, par l'intermédiaire de conduits (9) réalisés dans le dispositif de support (6), à la lumière de l'arbre creux (7) qui est elle-même reliée à une sortie (11) prévue pour le filtrat sortant des corps de filtration (8), et que des organes gênant l'écoulement (18) orientés d'une manière pratiquement axiale sont fixés sur la face intérieure de l'enveloppe cylindrique (2) de la cuve (1), ces organes (18) s'opposant à ce que les corps de filtration (8) du groupe le plus extérieur entraînent le liquide à filtrer dans leur mouvement de révolution.

2. Dispositif de filtration selon la revendication 1, caractérisé en ce que les extrémités des corps de filtration (8) situées à l'opposé du dispositif de support (6) sont fixées sur un anneau commun (59, 62, 63).

3. Dispositif de filtration selon la revendication 1, caractérisé en ce que les corps de filtration (8) sont cylindriques et disposés suivant plusieurs cercles concentriques, en un même nombre sur chaque cercle, et les diamètres des corps de filtration (8a, 8b, 8c) croissent avec le rayon des cercles suivant lesquels ils sont respectivement disposés, de façon à obtenir des espacements pratiquement identiques entre des corps de filtration voisins.

4. Dispositif de filtration selon la revendication 3, caractérisé en ce que les extrémités de tous les corps de filtration (8a, 8b, 8c) qui sont situées à l'opposé du dispositif de support (6) sont maintenues par une plaque de support (12) commune qui est pourvue de perforations entre les corps de filtration et qui comporte en son centre un moyeu (13) qui est monté rotatif sur un tronçon de tube (14) fixé dans une paroi frontale (4) de la cuve.

5. Dispositif de filtration selon la revendication 1, caractérisé en ce que, d'une manière concentrique vis-à-vis des corps de filtration (8) disposés suivant un anneau circulaire qui constituent un premier groupe, un deuxième groupe de corps de filtration (20) est disposé suivant un deuxième anneau circulaire, les corps de filtration (20) du deuxième groupe étant maintenus par in second dispositif de support (21) qui est orienté radialement à partir d'un second arbre creux (22) qui les porte et est monté rotatif dans l'une des parois frontales (4) de la cuve et qui est entraîné par un dispositif d'entraînement en rotation (23) dans un sens opposé au premier arbre creux (7), tandis que les cavités intérieures des corps de filtration (20) du deuxième groupe communiquent, par l'intermédiaire de conduits ménagés dans le second dispositif de support (21), avec la lumière du second arbre creux (22) qui communique elle-même avec une sortie prévue pour le filtrat sortant des corps de filtration (20) du deuxième groupe.

6. Dispositif de filtration selon la revendication 5, caractérisé en ce que, d'une manière concentrique vis-à-vis du deuxième groupe de corps de filtration (8b), il est prévu un troisième groupe de corps de filtration (8c) disposé suivant un anneau circulaire, ce troisième groupe étant fixé au dispositif de support (6) des corps de filtration (8d) du premier groupe, tandis que les corps de filtration (8b) du deuxième groupe sont disposés entre les corps de filtration (8a, 8c) du premier et du troisième groupe.

7. Dispositif de filtration selon l'une des revendications précédentes, caractérisé en ce que chacun des dispositifs de support (6, 21) est constitué de plusieurs tubes (6, 61), orientés radialement à partir de l'arbre creux (7, 22) associé, et d'un tore creux (48, 49, 60) qui est fixé sur ces tubes et qui est prévu pour chaque groupe de corps de filtration (8a, 8b, 8c), tandis que les cavités intérieures des tubes radiaux (6, 61) communiquent avec la lumière de l'arbre creux (7, 22) qui les porte et avec la cavité intérieure du tore creux (48, 49, 60) et que les corps de filtration (8a, 8b, 8c) sont fixés sur le tore creux (48, 49, 60).

8. Dispositif de filtration selon l'une des revendications précédentes, caractérisé en ce qu'un agitateur (27) est disposé dans la cuve (1) au voisinage de l'une (4) des parois frontales, cet agitateur créant dans le liquide à filtrer une composante d'écoulement qui est orientée suivant la direction axiale.

9. Dispositif de filtration selon l'une des revendications précédentes, caractérisé en ce que les corps de filtration (8) d'un groupe disposé suivant un cercle commun prennent appui, par leur côté qui fait face à l'axe (O) de la cuve, sur au moins un cerclage (72) commun sur lequel ils sont immobilisés au moyen d'un anneau de serrage (74), qui ceinture le groupe, et de plusieurs vis de serrage (75) qui relient l'anneau de serrage (74) au cerclage (72).

10. Dispositif de filtration selon la revendication 5, caractérisé en ce que les deux arbres creux (7, 22) sont disposés l'un dans l'autre suivant le même axe et traversent la même paroi frontale (3) de la cuve.

11. Dispositif de filtration selon la revendication 5, caractérisé en ce que les deux arbres creux (7, 22) sont disposés a l'opposé l'un de l'autre et traversent chacun une paroi frontale (3, 4) respective de la cuve.

12. Dispositif de filtration selon la revendication 11, caractérisé en ce qu'un agitateur (27) provoquant une composante axiale d'écoulement dans le liquide à filtrer est fixé sur l'un des arbres creux au voisinage de l'une (4) des parois frontales de la cuve.

13. Dispositif de filtration selon la revendication 1, caractérisé en ce que, d'une manière concentrique vis à-vis des corps de filtration (8a) disposés suivant un anneau circulaire qui constituent un premier groupe, un deuxième groupe de corps de filtration (8b) est disposé suivant un deuxième anneau circulaire, le deuxième groupe étant maintenu fixe dans la cuve (1) et étant relié à un dispositif (77) d'évacuation du filtrat sortant des corps de filtration (8b) du deuxième groupe.

14. Dispositif de filtration selon l'une des revendications 1 à 9, caractérisé en ce que les corps de filtration (8) sont maintenus sur le dispositif de support (6, 61) au moyen d'écrous à chapeau (53) qui sont vissés sur des filetages réalisés sur les corps de filtration (8).

15. Dispositif de filtration selon l'une des revendications précédentes, caractérisé en ce que chacun des corps de filtration (8) est constitué d'un tube (54) perforé, qui est fermé à ses extrémités vis à-vis de la cavité intérieure de la cuve (1), et d'un milieu de filtration (55) en forme de tuyau souple qui est disposé sur la face extérieure du tube (54).

16. Dispositif de filtration selon la revendication 15, caractérisé en ce que chacun des milieux de filtration (55) est fixé à ses extrémités sur le tube perforé (54) du corps de filtration (8) ou sur un élément de support (56, 57) portant le tube.

17. Dispositif de filtration selon la revendication 15 ou 16, caractérisé en ce qu'il est prévu, emboîté dans le tube perforé (54) de chaque corps de filtration (8), à une extrémité, un manchon (66) qui est pourvu d'une collerette (65) en saillie et qui est fixé à demeure sur le tube (54), ce manchon (66) comportant un tronçon d'extrémité (67) qui est libre et fait saillie à partir de la collerette (65) et qui est pourvu d'un filetage extérieur et est vissé dans un alésage fileté (64) pratiqué dans le dispositif de support (6, 48, 49).

18. Dispositif de filtration selon la revendication 15 ou 16, caractérisé en ce qu'il est prévu, emboîté dans le tube perforé (54) de chaque corps de filtration (8), à l'extrémité située à l'opposé du dispositif de support (6), un tronçon de tige (69) qui est fixé à demeure au tube (54) et comporte une section d'extrémité qui fait saillie hors du tube (54) et est pourvue d'un filetage et qui est fixée au moyen d'écrous (70) sur l'anneau (59) commun ou la plaque de support (12).

19. Dispositif de filtration selon l'une des revendications 1 à 17, caractérisé en ce que les corps de filtration (8) sont constitués chacun d'un élément de filtration (89) et d'une gaine de protection (90) rigide qui est enfilée par-dessus cet élément de filtration et qui comporte des ouvertures (91) relativement larges.

20. Dispositif de filtration selon la revendication 19, caractérisé en ce que l'élément de filtration (89) est un tube en céramique.

21. Dispositif de filtration selon l'une des revendications 1 à 14, caractérisé en ce que les corps de filtration ont une forme en coupe transversale qui est choisie parmi des formes circulaire, polygonale, lenticulaire.
